# EUROPEAN PATENT APPLICATION

(11) **EP 4 053 713 A1**
(43) Date of publication of application: **07.09.2022**
(21) Application number: 20890529.9
(22) Date of filing: 23.11.2020
(51) Int. Cl.: G06F 16/332

(54) **QUESTION AND ANSWER METHOD AND APPARATUS BASED ON KNOWLEDGE GRAPH**

(30) Priority: 22.11.2019 CN 201911155641
(71) Applicant: Huawei Cloud Computing Technologies Co., Ltd., Guizhou 550025 (CN)
(72) Inventor: LU, Dongcai, Shenzhen, Guangdong 518129 (CN); LIU, Yuanzhen, Shenzhen, Guangdong 518129 (CN); ZHENG, Yi, Shenzhen, Guangdong 518129 (CN); YUAN, Jing, Shenzhen, Guangdong 518129 (CN); HUAI, Baoxing, Shenzhen, Guangdong 518129 (CN)
(74) Representative: Goddar, Heinz J.
(86) International application number: PCT/CN2020/130820
(87) International publication number: WO 2021/098876

(57) **Abstract**

A question answering method and apparatus based on a knowledge graph are disclosed, and relate to the field of information processing technologies, to resolve a problem that a terminal cannot query the knowledge graph for a result of a natural query statement that does not have complete semantics. The question answering method includes: After obtaining a first natural query statement including a first query entity and first entity characteristic information, the terminal queries the knowledge graph based on the first query entity and the first entity characteristic information, to obtain a first result. The terminal obtains a second natural query statement after outputting the first result. The terminal determines a missing part in the second natural query statement based on the first query entity or the first entity characteristic information. The terminal queries the knowledge graph based on the missing part in the second natural query statement to obtain a second result, and outputs the second result.

## Description

### TECHNICAL FIELD

This application relates to the field of information processing technologies, and in particular, to a question answering method and apparatus based on a knowledge graph.

### BACKGROUND

A terminal can accurately and quickly obtain, based on a knowledge graph, an answer to a question asked by a user in a natural language. Specifically, after obtaining the question entered by the user, the terminal converts the question into a computer query language, and queries information from the knowledge graph based on the computer query language, to obtain the answer to the question.

In the conventional technology, when the user enters a question that has complete semantics, the terminal can find an answer to the question based on a knowledge graph. However, if semantics of a question entered by the user is incomplete, the terminal cannot convert the question into a computer query language, and consequently cannot obtain an answer to the question.

### SUMMARY

This application provides a question answering method and apparatus based on a knowledge graph, to effectively resolve a problem that a terminal cannot query the knowledge graph for a result of a natural query statement that does not have complete semantics.

To achieve the objectives, this application provides the following technical solutions.

According to a first aspect, this application provides a question answering method based on a knowledge graph. A question answering apparatus based on the knowledge graph obtains a first natural query statement including a first query entity and first entity characteristic information, where the first entity characteristic information includes at least one of an attribute of the first query entity or a relationship of the first query entity. The question answering apparatus queries the knowledge graph based on the first query entity and the first entity characteristic information to obtain a first result, and outputs the first result; then, the question answering apparatus obtains a second natural query statement, and determines a missing part in the obtained second natural query statement based on the first query entity or the first entity characteristic information. In this way, the question answering apparatus queries the knowledge graph based on the determined missing part in the second natural query statement, to obtain a second result, and outputs the second result.

It can be learned that when receiving a natural query statement (for example, the second natural query statement in this application) that is entered by a user and that does not have complete semantics, a terminal can supplement, with reference to a historical query entity and historical entity characteristic information in a current session (for example, the first query entity and the first entity characteristic information in this application), the semantics of the current natural query statement. Further, the terminal queries a knowledge graph based on a natural query statement that has complete semantics, and outputs the result to the user.

Compared with the conventional technology in which an answer fed back to a user is usually inaccurate because a conventional question answering system only establishes a one-to-one relationship mapping network in a database, and connection between knowledge points is very weak, this application provides the question answering method based on the knowledge graph, which can quickly and accurately feed back the answer to the user, and effectively resolve a problem that the terminal cannot obtain the query result of the natural query statement that does not have complete semantics.

With reference to the first aspect, in a possible design manner, after obtaining the first natural query statement, the question answering apparatus further identifies the first query entity and the first entity characteristic information in the first natural query statement, and stores the first query entity and the first entity characteristic information.

The question answering apparatus stores the first query entity and the first entity characteristic information, so that the question answering apparatus may query for a result of a natural query statement based on the first query entity and the first entity characteristic information when a user subsequently enters the natural query statement that does not have complete semantics.

With reference to the first aspect, in another possible design manner, before determining, based on the first query entity or the first entity characteristic information, a missing part in the second natural query statement, the question answering apparatus further determines that the second natural query statement misses a second query entity or second entity characteristic information, where the second entity characteristic information includes at least one of an attribute of the second query entity or a relationship of the second query entity.

Specifically, if determining that the second natural query statement misses the second query entity, the question answering apparatus determines the second query entity based on the first query entity. If determining that the second natural query statement misses the second entity characteristic information, the question answering apparatus determines the second entity characteristic information based on the first entity characteristic information.

When determining that there is a missing part in the second natural query statement, the question answering apparatus determines the missing part in the second natural query statement based on the first query entity or the first entity characteristic information. In this way, the question answering apparatus may determine the query statement that has a complete statement based on the determined missing part in the second natural query statement and the second natural query statement.

With reference to the first aspect, in another possible design manner, the method in which "the question answering apparatus determines that the second natural query statement misses a second query entity or second entity characteristic information" includes: The question answering apparatus identifies a query entity and entity characteristic information in the second natural query statement according to a preset rule, to obtain the second query entity or the second entity characteristic information.

Specifically, if the question answering apparatus does not obtain the second query entity, the question answering apparatus determines that the second natural query statement misses the second query entity. If the question answering apparatus does not obtain the second entity characteristic information, the question answering apparatus determines that the second natural query statement misses the second entity characteristic information.

With reference to the first aspect, in another possible design manner, the method in which "the question answering apparatus identifies a query entity and entity characteristic information in the second natural query statement according to a preset rule, to obtain the second query entity or the second entity characteristic information" includes: The question answering apparatus inputs the second natural query statement into a first preset model, to obtain an initial query entity or initial entity characteristic information in the second natural query statement.

If the initial query entity is obtained, the question answering apparatus extends the initial query entity based on a preset algorithm and the second natural query statement. Then, the question answering apparatus obtains the second query entity based on a preset dictionary and an extended initial query entity. If the initial entity characteristic information is obtained, the question answering apparatus extends the initial entity characteristic information based on a preset algorithm and the second natural query statement. Then, the question answering apparatus obtains the second entity characteristic information based on a dictionary and extended initial entity characteristic information. Herein, the dictionary corresponds to the knowledge graph.

When identifying the query entity and the entity characteristic information in the natural query statement, the question answering apparatus in this application may first identify the initial query entity and the initial entity characteristic information by using the first preset model, and then extend the initial query entity and the initial entity characteristic information based on the preset algorithm. Then, the question answering apparatus determines a final query entity and final entity characteristic information with reference to a preset dictionary tree. Compared with the conventional technology in which a dictionary tree is directly used to identify a query entity and entity characteristic information in a natural query statement, this application has higher accuracy of identifying the query entity and the entity characteristic information.

With reference to the first aspect, in another possible design manner, the question answering apparatus determines a question type of the second natural query statement based on the second query entity, the second entity characteristic information, and the second natural query statement by using a preset question model.

In the question answering method based on the knowledge graph provided in this application, the question answering apparatus determines a question type of the natural query statement. A process of converting a natural query statement into a knowledge graph query statement in the conventional technology is simplified, and user experience is improved.

With reference to the first aspect, in another possible design manner, the method in which "the question answering apparatus queries the knowledge graph based on the missing part in the second natural query statement, to obtain a second result" includes: The question answering apparatus first determines a question template of the second natural query statement based on the second natural query statement and the missing part in the second natural query statement. Then, the question answering apparatus determines a target query statement from a preset question template library. The target query statement corresponds to a target question template, and the target question template is a template that is in the question template library and that has a highest similarity to the question template of the second natural query statement. Then, the question answering apparatus queries the knowledge graph based on the question type of the second natural query statement and the target query statement to obtain the second result. Herein, the question template library includes m (m is a positive integer) question templates and m query statements, and each of the m query statements uniquely corresponds to one question template.

The question answering apparatus determines a query statement by using a question template library. A process of converting the natural query statement into the knowledge graph query statement in the conventional technology is simplified, and user experience is improved.

With reference to the first aspect, in another possible design manner, after determining the second query entity and the second entity characteristic information, the question answering apparatus further stores the second query entity and the second entity characteristic information.

With reference to the first aspect, in another possible design manner, the question answering apparatus further determines a guide statement based on the first query entity, the first entity characteristic information, the missing part in the second natural query statement, the second natural query statement, and a preset guide policy, and outputs the guide statement, where the guide statement is used to guide a next operation of a user.

The question answering apparatus can perform guide recommendation for the user based on historical query information of the user and the guide policy, to improve interaction experience between the user and the question answering apparatus.

According to a second aspect, this application provides a question answering apparatus based on a knowledge graph. The question answering apparatus includes: an obtaining unit, a query unit, an output unit, and a determining unit.

The obtaining unit is configured to obtain a first natural query statement, where the first natural query statement includes a first query entity and first entity characteristic information, and the first entity characteristic information includes at least one of an attribute of the first query entity or a relationship of the first query entity. The query unit is configured to query the knowledge graph based on the first query entity and the first entity characteristic information, to obtain a first result. The output unit outputs the first result found by the query unit. The obtaining unit is further configured to obtain a second natural query statement. The determining unit is configured to determine a missing part in the second natural query statement based on the first query entity or the first entity characteristic information. The query unit is further configured to query the knowledge graph based on the missing part in the second natural query statement determined by the determining unit, to obtain a second result. The output unit is further configured to output the second result found by the query unit.

With reference to the second aspect, in a possible design, the question answering apparatus further includes a storage unit. The storage unit is configured to store the first query entity and the first entity characteristic information.

With reference to the second aspect, in a possible design manner, the determining unit is further configured to: before determining the missing part in the second natural query statement based on the first query entity or the first entity characteristic information, determine that the second natural query statement misses a second query entity or second entity characteristic information, where the second entity characteristic information includes at least one of an attribute of the second query entity or a relationship of the second query entity. The determining unit is specifically configured to: if the second natural query statement misses the second query entity, determine the second query entity based on the first query entity. The determining unit is further specifically configured to: if the second natural query statement misses the second entity characteristic information, determine the second entity characteristic information based on the first characteristic information.

With reference to the second aspect, in a possible design manner, the question answering apparatus further includes an identification unit. The identification unit is configured to identify a query entity and entity characteristic information in the second natural query statement according to a preset rule, to obtain the second query entity or the second entity characteristic information. The determining unit is specifically configured to: if the identification unit does not obtain the second query entity, determine that the second natural query statement misses the second query entity; or if the identification unit does not obtain the second entity characteristic information, determine that the second natural query statement misses the second entity characteristic information.

With reference to the second aspect, in a possible design manner, the identification unit is specifically configured to: input the second natural query statement into a first preset model, to obtain an initial query entity or initial entity characteristic information; if the initial query entity is obtained, extend the initial query entity based on a preset algorithm and the second natural query statement; and obtain the second query entity based on a preset dictionary and an extended initial query entity; or if the initial entity characteristic information is obtained, extend the initial entity characteristic information based on a preset algorithm and the second natural query statement; and obtain the second entity characteristic information based on a dictionary and an extended initial entity characteristic information, where the dictionary corresponds to the knowledge graph.

With reference to the second aspect, in a possible design manner, the determining unit is further configured to determine a question type of the second natural query statement based on the second query entity, the second entity characteristic information, and the second natural query statement by using a preset question model.

With reference to the second aspect, in a possible design manner, the determining unit is further configured to determine a question template of the second natural query statement based on the second natural query statement and the missing part in the second natural query statement. The determining unit is further configured to determine a target query statement from a preset question template library. The question template library includes m question templates and m query statements. Each of the m query statements uniquely corresponds to one question template, and m is a positive integer. The target query statement corresponds to a target question template, and the target question template is a template that is in the question template library and that has a highest similarity to the question template of the second natural query statement. The query unit is further configured to query the knowledge graph based on the question type of the second natural query statement and the target query statement that are determined by the determining unit, to obtain the second result.

With reference to the second aspect, in a possible design manner, the storage unit is further configured to store the second query entity and the second entity characteristic information.

With reference to the second aspect, in a possible design manner, the determining unit is further configured to determine a guide statement based on the first query entity, the first entity characteristic information, the missing part in the second natural query statement, the second natural query statement, and a preset guide policy, where the guide statement is used to guide a next operation of a user. The output unit is further configured to output the guide statement determined by the determining unit.

According to a third aspect, this application provides a question answering apparatus based on a knowledge graph. The question answering apparatus includes a memory and one or more processors, and the memory and the processor are coupled. The memory is further configured to store computer program code. The computer program code includes computer instructions. When the computer instructions are executed by the question answering apparatus, the question answering apparatus is enabled to perform the question answering method according to any one of the first aspect and the possible design manners of the first aspect.

According to a fourth aspect, this application provides a chip system. The chip system is applied to a question answering apparatus based on a knowledge graph, and the chip system includes one or more interface circuits and one or more processors. The interface circuit and the processor are interconnected through a line. The interface circuit is used to receive a signal from a memory of the question answering apparatus, and send the signal to the processor, where the signal includes computer instructions stored in the memory. When the processor executes the computer instructions, the question answering apparatus performs the question answering method according to any one of the first aspect and the possible design manners of the first aspect.

According to a fifth aspect, this application provides a non-volatile storage medium. The non-volatile storage medium includes computer instructions. When the computer instructions are run on a question answering apparatus based on a knowledge graph, so that the question answering apparatus implements the question answering method according to any one of the first aspect and the possible design manners of the first aspect.

According to a sixth aspect, this application provides a computer program product. When the computer program product runs on a computer, the computer is enabled to perform the question answering method based on the knowledge graph according to any one of the first aspect and the possible design manners of the first aspect.

For detailed descriptions of the second aspect to the sixth aspect and various implementations thereof in this application, refer to detailed descriptions of the first aspect and the various implementations thereof. In addition, for beneficial effects of the second aspect to the sixth aspect and the various implementations thereof, refer to the analysis of beneficial effects of the first aspect and the various implementations thereof. Details are not described herein again.

In this application, a name of the question answering apparatus based on the knowledge graph does not constitute any limitation to devices or function modules. During actual implementation, these devices or function modules may have other names. Each device or function module falls within the scope of the claims and their equivalent technologies in this application, provided that a function of each device or function module is similar to that of a device or a function module in this application.

These aspects or other aspects in this application are more concise and comprehensible in the following descriptions.

### BRIEF DESCRIPTION OF DRAWINGS

FIG. 1 is a schematic diagram 1 of a structure of a knowledge graph according to an embodiment of this application;
FIG. 2 is a schematic diagram 2 of a structure of a knowledge graph according to an embodiment of this application;
FIG. 3 is a schematic diagram of a hardware structure of question answering apparatus based on a knowledge graph according to an embodiment of this application;
FIG. 4A and FIG. 4B are a schematic flowchart 1 of a question answering method based on a knowledge graph according to an embodiment of this application;
FIG. 5(a) to FIG. 5(d) are a schematic diagram 1 of an example of a display interface according to an embodiment of this application;
FIG. 6(a) to FIG. 6(c) are a schematic diagram 2 of an example of a display interface according to an embodiment of this application;
FIG. 7 is a schematic flowchart 2 of a question answering method based on a knowledge graph according to an embodiment of this application;
FIG. 8(a) to FIG. 8(d) are a schematic diagram 3 of an example of a display interface according to an embodiment of this application;
FIG. 9 is a schematic diagram of a structure of a question answering apparatus based on a knowledge graph according to an embodiment of this application;
FIG. 10 is a schematic diagram of a structure of a chip system according to an embodiment of this application; and
FIG. 11 is a schematic diagram of a structure of a computer program product according to an embodiment of this application.

### DESCRIPTION OF EMBODIMENTS

In embodiments of this application, the word "example" or "for example" is used to represent giving an example, an illustration, or a description. Any embodiment or design scheme described as an "example" or with "for example" in the embodiments of this application should not be explained as being more preferred or having more advantages than another embodiment or design scheme. Exactly, use of the term such as "example" or "for example" is intended to present a related concept in a specific manner.

The terms "first" and "second" in the embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise specified, "a plurality of' means two or more than two.

To better understand a question answering method based on a knowledge graph provided in the embodiments of this application, the following briefly describes technical elements in the embodiments of this application.

### Knowledge graph (knowledge graph, KG)

A knowledge graph is a structured semantic knowledge base whose basic unit is a triplet of "entity, relationship, and entity" or a triplet of "entity, attribute, and attribute value". Usually, an attribute value can also be understood as a constant entity.

The knowledge graph usually includes nodes and edges. The node represents an entity or an attribute value, and the edge represents an attribute or a relationship. In the knowledge graph, the edges connect the nodes to form a network structure. Each node corresponds to a unique identity (identity, ID), and each edge corresponds to a unique identity. The knowledge graph can be applied to scenarios such as knowledge inference, knowledge search, and knowledge question answering, and can provide a precise and refined answer.

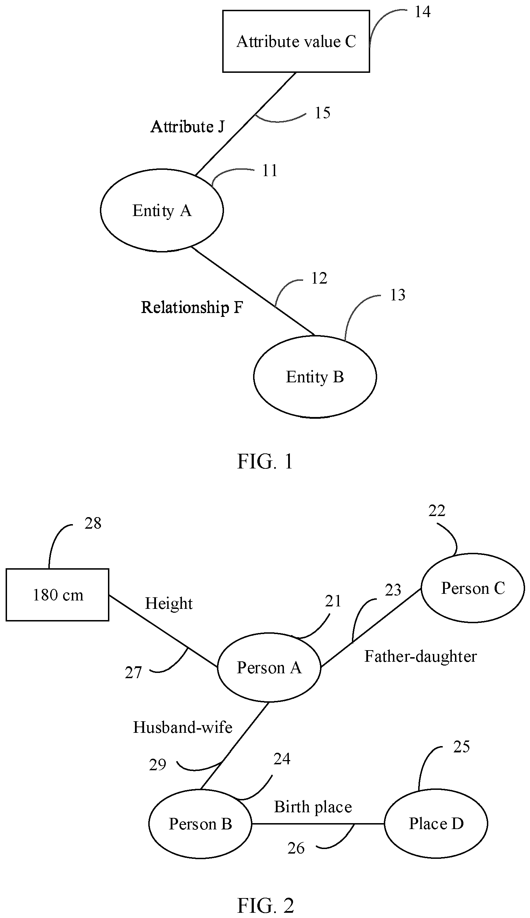

For example, FIG. 1 shows a basic structure of a knowledge graph. The knowledge graph includes a node 11, a node 13, and a node 14. The node 11 and the node 13 are connected by using an edge 12, and the node 11 and the node 14 are connected by using an edge 15. The node 11 represents an entity A, the edge 12 represents a relationship F, the node 13 represents an entity B, the node 14 represents an attribute value C, and the edge 15 represents an attribute J. The node 11, the edge 12, and the node 13 form a triplet of "entity, relationship, and entity", which is specifically used to indicate that "the relationship F exists between the entity A and the entity B". The node 11, the node 14, and the edge 15 form a triplet of "entity, attribute, and attribute value", which is specifically used to indicate that "an attribute value of the attribute J of the entity A is the attribute value C".

The entity in this embodiment of this application may be a name of a person, a name of a place, an occupation, or the like. The attribute may be height, weight, longitude, latitude, and the like. The relationship may be a father-son relationship, a mother-son relationship, a spouse relationship, a geographical area relationship, or the like. The father-son relationship may also include relationships such as "son" and "father".

As shown in FIG. 2, an entity may be a person A (a node 21) and a person C (a node 22), and a relationship may be father-daughter (an edge 23). Therefore, it can be learned from FIG. 2 that the person A and the person C have the father-daughter relationship. An entity may also be a person B (a node 24) and a place D (a node 25), and a relationship may be a birth place (an edge 26). Therefore, it can be learned from FIG. 2 that the person B is born in the place D. A relationship may also be husband-wife (an edge 29). Therefore, it can be learned that the person A and the person B have the husband-wife relationship. An attribute may be height (an edge 27), and an attribute value may be 180 cm (a node 28). Therefore, it can be learned from FIG. 2 that the height of the person A is 180 cm.

### Question answering system (question answering system, QAS)

A question answering system is an advanced form of an information retrieval system. The question answering system can answer, with an accurate and concise natural language, a question asked by a user in a natural language.

In actual application, a terminal receives the question asked and entered by the user in the natural language, and converts, by using a natural language understanding (natural language understanding, NLU) algorithm, the natural language question entered by the user into a machine query language. The terminal searches a database based on the machine query language and returns a result. Further, the terminal outputs the result to the user.

### Knowledge graph based question answering system (knowledge graph based question answering system)

A knowledge graph based question answering system is a question answering system based on a knowledge graph. Specifically, a user enters a question expressed in a natural language, and a terminal performs semantic understanding on the question, and further converts the question into a knowledge graph query statement. The terminal performs query and inference on the knowledge graph based on the knowledge graph query statement, and returns a result. Finally, the terminal converts the result into a natural language to output to the user.

Based on the knowledge graph based question answering system, the terminal can quickly, finely and accurately answer the question asked by the user.

Usually, for a question that has complete semantics and that is entered by the user to the terminal, a question answering method completed based on the knowledge graph based question answering system may be implemented by using the following steps.

S1: The terminal obtains a natural query statement.

The natural query statement obtained by the terminal is expressed by the user in a natural language and has complete semantics. The natural query statement clearly reflects a purpose of the user.

For example, the user enters the natural query statement "What is the height of A?" to the terminal. Based on the natural query statement, the terminal can analyze the purpose of the user, that is, the user wants to query the height of A. In this case, "What is the height of A" is the question that has complete semantics.

If the user enters "How about A?" to the terminal, the question of the user only concerns an object A. In this case, the terminal cannot analyze a purpose of the user. Therefore, "How about A?" does not have complete semantics.

S2: The terminal identifies a query entity and entity characteristic information in the natural query statement, and links the query entity and the entity characteristic information to the knowledge graph.

After obtaining the natural query statement, the terminal first identifies the query entity and the entity characteristic information in the natural query statement. The entity characteristic information is at least one of an attribute of the query entity and a relationship of the query entity.

Specifically, after obtaining the natural query statement, the terminal inputs the natural query statement into a dictionary tree, to obtain the query entity and the entity characteristic information in the natural query statement. Herein, the dictionary tree is constructed by the terminal in advance based on a dictionary. For example, the terminal constructs the dictionary tree based on the dictionary by using an automaton method. The dictionary for constructing the dictionary tree may be a dictionary exported by using the knowledge graph, or a dictionary generated based on data for generating the knowledge graph. In other words, the dictionary corresponds to the knowledge graph.

For example, if the natural query statement is "What is the height of A?", the terminal inputs the natural query statement into the dictionary tree, to obtain the query entity "A" and the attribute "height" of the query entity. If the natural query statement is "Who is the daughter of A?", the terminal inputs the natural query statement into the dictionary tree, to obtain the query entity "A" and the relationship "daughter" of the query entity. If the natural query statement is "What is the height of the daughter of A?", the terminal inputs the natural query statement into the dictionary tree, to obtain the query entity "A", the relationship "daughter" of the query entity, and the attribute "height" of the query entity.

After identifying the query entity and the entity characteristic information in the natural query statement, the terminal links the identified query entity and the identified entity characteristic information to the knowledge graph.

Specifically, the terminal calculates a similarity between the identified query entity and each node in the knowledge graph, and links the query entity to a node that is in the knowledge graph and that has a greatest similarity to the query entity. Correspondingly, the terminal obtains an identity (for example, an ID) of the node. In addition, the terminal calculates a similarity between the identified entity characteristic information and each edge in the knowledge graph, and links the entity characteristic information to an edge that is in the knowledge graph and that has a highest similarity to the entity characteristic information. Correspondingly, the terminal obtains an identity (for example, an ID) of the edge.

S3: The terminal converts the natural query statement into a knowledge graph query statement, queries for a result from the knowledge graph based on the knowledge graph query statement, and returns the result.

The knowledge graph is usually stored in a database. Therefore, when query is performed on the knowledge graph based on the natural query statement, the natural query statement needs to be first converted into the knowledge graph query statement for the database, and then the result is searched for from the knowledge graph based on the knowledge graph query statement.

For example, if the natural query statement is "What is the height of A?", the terminal converts the natural query statement into the knowledge graph query statement "select y from database where <A x> and <height y>". Further, the terminal replaces "A" and "height" in the knowledge graph query statement with the ID of the node corresponding to the query entity in the knowledge graph and the ID of the edge corresponding to the entity characteristic information in the knowledge graph that are obtained in S2, and queries for the result from the knowledge graph. After finding the result from the knowledge graph, the terminal returns the result.

If the terminal searches for the result from the knowledge graph based on "select ID height from database where ID (A)", and finds that a value (namely, an attribute value) corresponding to an attribute (namely, the height) of A is " 180 cm", the terminal then returns "180 cm".

S4: The terminal outputs the query result.

Further, the terminal outputs the result returned in S3.

In actual application, the user omits some content in a question when the user continuously puts forward a same or similar question to the question answering system.

For example, when the user first puts forward a question 1 "What is the height of A?", the terminal queries and obtains a result 1 of the question 1, and then outputs the result 1 to the user. Then, the user may further ask a question 2 "How about B?" in a normal language habit. In this case, what the user actually wants to know is the height of B. However, because the question 2 includes only the object B, the terminal cannot identify what a real purpose of the user is, and therefore cannot find a result of the question for the user.

Based on this, the embodiments of this application provide a question answering method and apparatus based on a knowledge graph. When receiving a natural query statement that is entered by a user and that does not have complete semantics, a terminal can supplement the semantics of the current question with reference to a pre-stored entity and pre-stored characteristic information (for example, the first query entity and the first entity characteristic information in the embodiments of this application). Further, the terminal queries the knowledge graph based on a question that has complete semantics, and outputs a query result to the user, to effectively resolve a problem that the terminal cannot obtain the query result of the natural query statement that does not have complete semantics.

The question answering method based on the knowledge graph provided in the embodiments of this application may be implemented by using an application installed on the terminal, for example, a browser, an intelligent customer service in an electronic mall, or a voice assistant.

The application may be an embedded application (namely, a system application of a device) installed on the device, or may be a downloadable application. The embedded application is an application provided as a part of the device (for example, a mobile phone). The downloadable application is an application that can provide an internet protocol multimedia subsystem (internet protocol multimedia subsystem, IMS) connection of the downloadable application. The downloadable application may be an application pre-installed on a device or a third-party application that is downloaded by a user and installed on a device.

A question answering apparatus based on a knowledge graph provided in the embodiments of this application may be a terminal. Specifically, the terminal may be a portable device such as a mobile phone, a tablet computer, or a wearable electronic device, may be a device such as a vehicle-mounted device or an intelligent robot, or may be a computing device such as a personal computer (personal computer, PC), a personal digital assistant (personal digital assistant, PDA), a netbook, or a server.

The following describes a hardware structure of the question answering apparatus based on the knowledge graph.

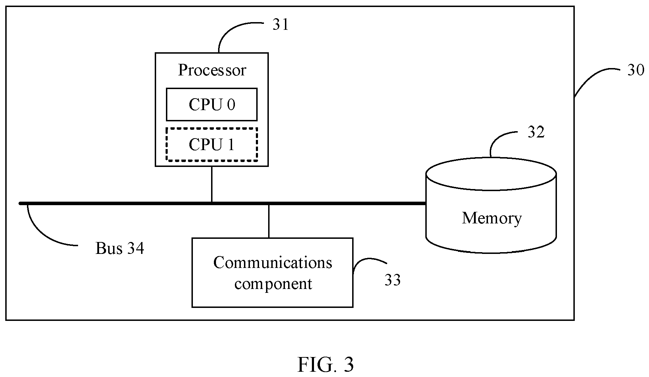

FIG. 3 shows a hardware structure of a question answering apparatus 30 based on a knowledge graph according to an embodiment of this application. As shown in FIG. 3, the question answering apparatus 30 based on the knowledge graph includes a processor 31, a memory 32, a communications component 33, and a bus 34. The processor 31, the memory 32, and the communications component 33 may be connected through the bus 34.

The processor 31 is a control center of the question answering apparatus 30 based on the knowledge graph, and may be a general-purpose central processing unit (central processing unit, CPU), another general-purpose processor, or the like. The general-purpose processor may be a microprocessor, any conventional processor, or the like.

In an example, the processor 31 may include one or more CPUs, for example, a CPU 0 and a CPU 1 that are shown in FIG. 3.

The memory 32 may be a read-only memory (read-only memory, ROM) or another type of static storage device capable of storing static information and instructions, or a random access memory (random access memory, RAM) or another type of dynamic storage device capable of storing information and instructions; may be an electrically erasable programmable read-only memory (electrically erasable programmable read-only memory, EEPROM), a magnetic disk storage medium or another magnetic storage device, or any other medium capable of carrying or storing expected program code in a form of an instruction or a data structure and capable of being accessed by a computer. However, this is not limited herein.

In a possible implementation, the memory 32 may be independent of the processor 31. The memory 32 may be connected to the processor 31 through the bus 34, and is configured to store data, instructions, or program code. When invoking and executing the instructions or the program code stored in the memory 32, the processor 31 can implement the question answering method based on the knowledge graph provided in the embodiments of this application.

In another possible implementation, the memory 32 may alternatively be integrated with the processor 31.

The communications component 33 is configured to connect the question answering apparatus 30 based on the knowledge graph to another device (for example, a client or a server) over a communications network. The communications network may be an Ethernet, a radio access network (radio access network, RAN), a wireless local area network (wireless local area network, WLAN), or the like. The communications component 33 is specifically configured to receive data or send data, for example, "obtain the first natural query statement" in the embodiments of this application.

When the question answering apparatus based on the knowledge graph is a computing device (for example, a server), the communications component 33 may be a network interface or the like.

When the question answering apparatus based on the knowledge graph is a portable device (for example, a mobile phone), the communications component 33 may be an antenna, a touchscreen, a microphone, a speaker, or the like. The touchscreen may specifically include a touchpad and a display.

The touchpad may collect a touch event performed by a user of the portable device on or near the portable device (for example, an operation performed by the user on or near the touchpad by using any appropriate object, for example, a finger or a stylus), and send collected touch information to another component (for example, the processor 31). The touch event performed by the user near the touchpad may be referred to as floating touch. The floating touch may indicate that the user does not need to directly touch the touchpad to select, move, or drag a target (for example, an icon), and instead, the user only needs to be near the device to perform a desired function. In addition, the touchpad may be implemented in a plurality of types such as a resistive type, a capacitive type, an infrared type, and a surface acoustic wave type.

The display may be configured to display information entered by a user or information provided for a user, and various menus of the portable device. The display may be configured in a form such as a liquid crystal display or an organic light emitting diode. The touchpad may cover the display. After detecting the touch event on or near the touchpad, the touchpad transfers the touch event to the processor 31 to determine a type of the touch event. Then, the processor 31 may provide corresponding visual output on the display based on the type of the touch event.

The bus 34 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 3, but this does not mean that there is only one bus or only one type of bus.

It should be noted that the structure shown in FIG. 3 does not constitute a limitation on the question answering apparatus based on the knowledge graph. In addition to the components shown in FIG. 3, the question answering apparatus 30 based on the knowledge graph may include more or fewer components than those shown in the figure, or some components may be combined, or different component arrangements may be used.

The following describes the question answering method based on the knowledge graph provided in the embodiments of this application.

The terminal in the embodiments of this application stores the knowledge graph, a first preset model, a second preset model, a dictionary tree, and a question template library.

The first preset model is used to identify an entity and characteristic information in the natural query statement. A developer marks entities and characteristic information in a large quantity of natural language questions, and trains data to obtain the first preset model.

The second preset model (corresponding to a question model in the embodiments of this application) is used to perform question classification on the natural query statement. The developer marks question types of a large quantity of natural language questions, and trains data to obtain the second preset model.

The dictionary tree is used to identify the query entity and the entity characteristic information in the natural query statement. For construction of the dictionary tree, refer to the foregoing description. Details are not described herein again.

The question template library includes a question template and a knowledge graph query statement, and the question template corresponds to the knowledge graph query statement. The terminal may determine, in the question template library based on a template of the natural query statement, a knowledge graph query statement corresponding to the natural query statement.

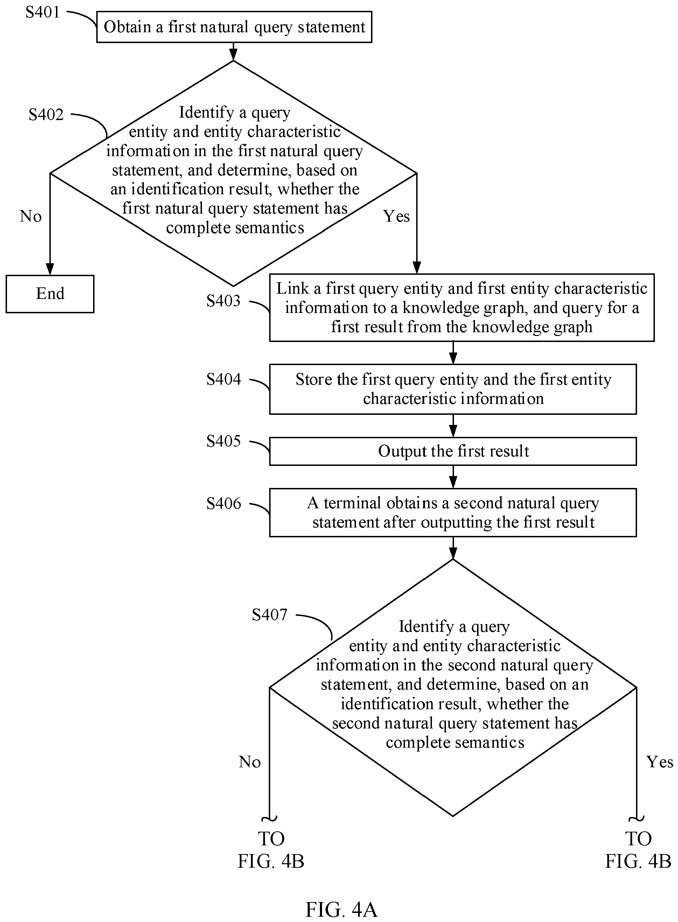

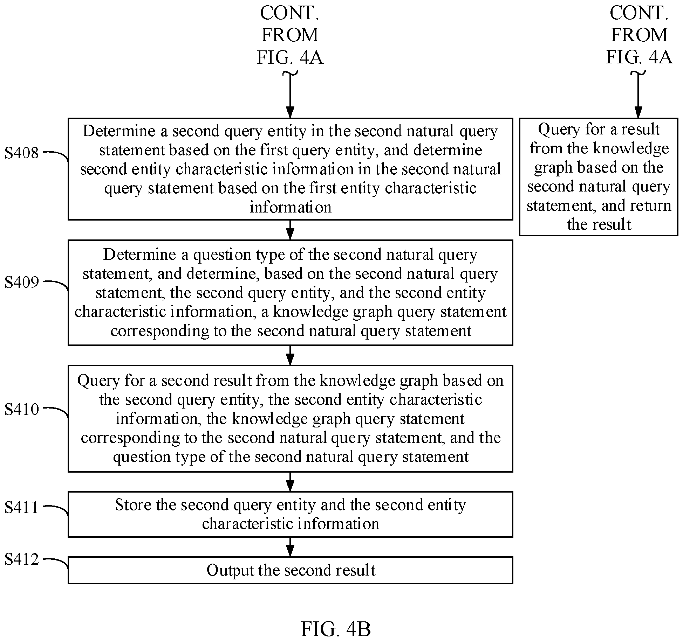

FIG. 4A and FIG. 4B are a schematic flowchart of a question answering method based on a knowledge graph according to an embodiment of this application. This embodiment of this application is described below by using an example in which a question answering apparatus based on the knowledge graph is a terminal.

As shown in FIG. 4A and FIG. 4B, the question answering method based on the knowledge graph includes the following steps.

S401: The terminal obtains a first natural query statement.

The first natural query statement is the first natural query statement that is expressed by a user in a natural language and that is input to the terminal in a current session.

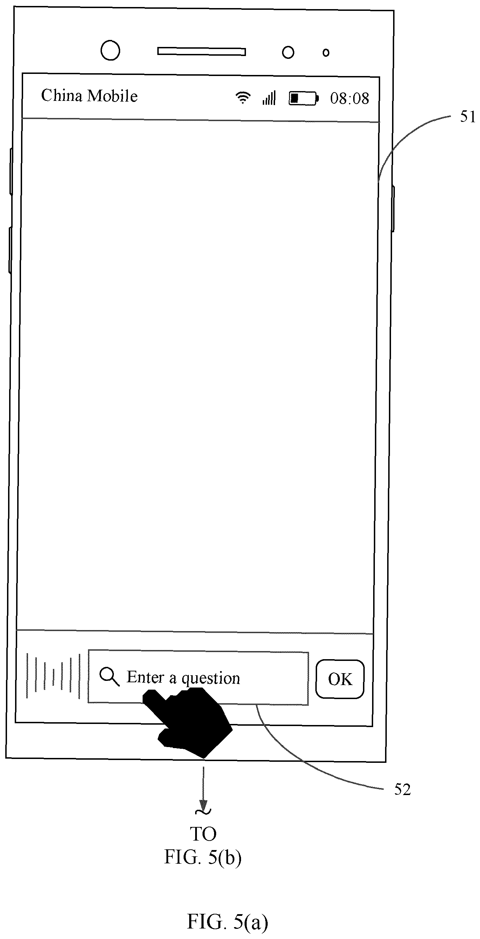

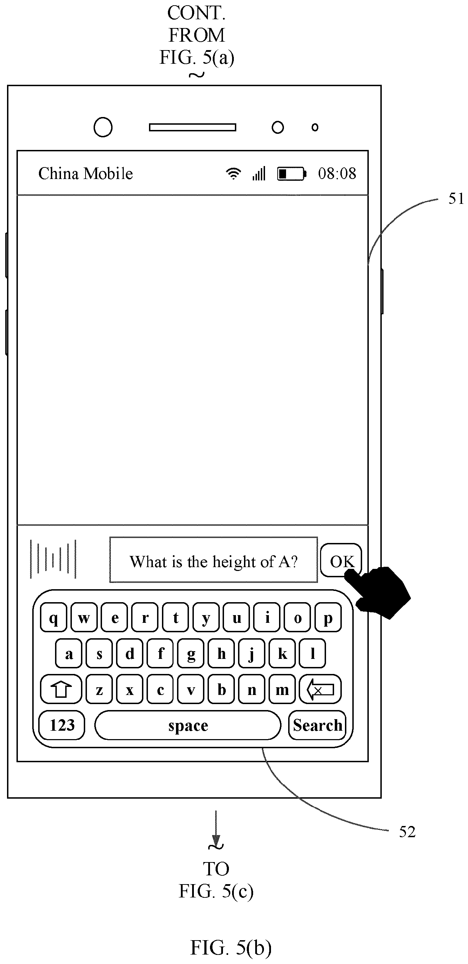

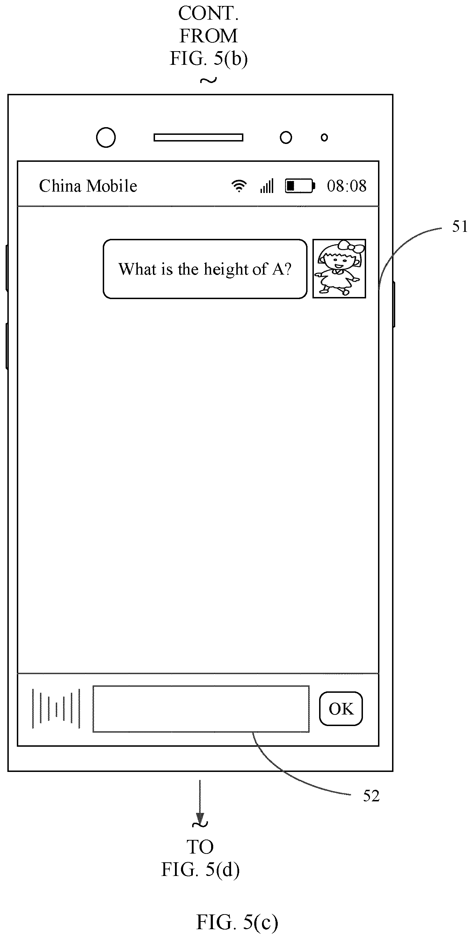

In an implementation, if the terminal is a portable device (for example, a mobile phone), the user may manually enter the first natural query statement in a question-answering input box via the terminal. For example, as shown in FIG. 5(a), the terminal is a mobile phone. The user taps a question-answering input box in a question-answering interface 51 displayed on a touchscreen of the mobile phone, to invoke a virtual keyboard. Then, as shown in FIG. 5(b), the user enters the first natural query statement "What is the height of A?" in the question-answering input box 52 by using the virtual keyboard, and taps an "OK" button to submit the first natural query statement. In response to the operation, as shown in FIG. 5(c), the mobile phone obtains the first natural query statement, and displays the first natural query statement in the display interface on the mobile phone.

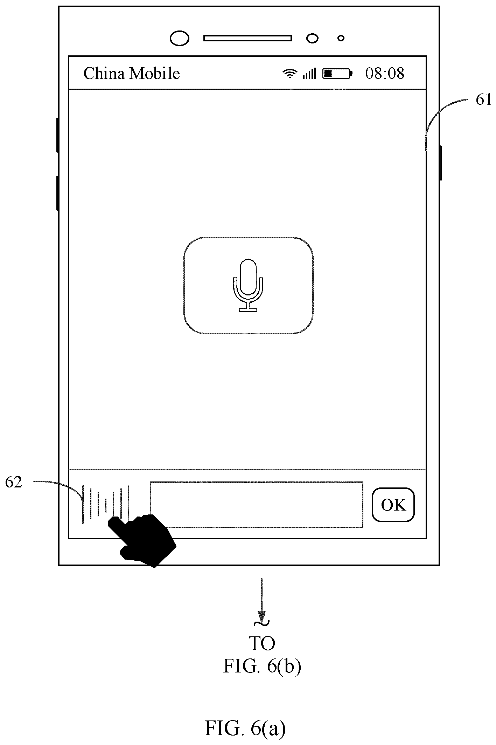

In another implementation, if the terminal is a portable device (for example, a mobile phone), the user may enter the first natural query statement through a voice. As shown in FIG. 6(a) to FIG. 6(c), for example, the terminal is a mobile phone.

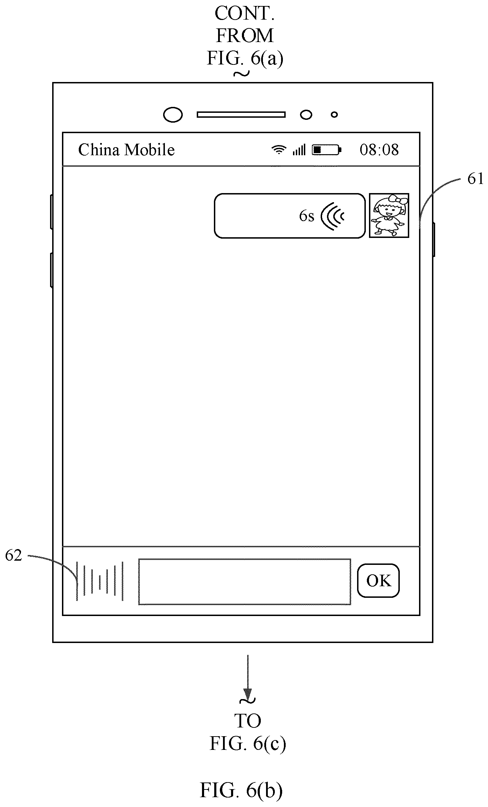

In an example, as shown in FIG. 6(a), the user performs an operation on a voice input icon 62 in a question-answering interface 61 displayed on a touchscreen of the mobile phone, and inputs a first voice through a microphone. The operation performed by the user on the voice input icon 62 in the question-answering interface 61 displayed on the touchscreen of the mobile phone may be tapping the icon, or may be touching and holding the icon. This is not limited in this application. In response to the operation of the user, the mobile phone obtains the first voice, and displays the first voice in the display interface on the mobile phone in a form of a voice bar, as shown in FIG. 6(b). Certainly, the voice bar displayed in the display interface may also be converted into a text displayed in the display interface. For a specific process in which the mobile phone converts the first voice into the text, refer to the conventional technology. Details are not described in this embodiment of this application.

In another example, the user wakes up the mobile phone by using a wake-up word. Then, the user enters the first natural query statement through the voice. For example, the user speaks the wake-up word "hello hello" to the mobile phone, and the mobile phone is woken up in this case. Then, the terminal inputs a first voice through a microphone. In response to the operation of the user, the mobile phone obtains the first voice, converts the first voice into a text, and then displays the text in a display interface on a touchscreen of the mobile phone.

In still another implementation, if the terminal is a computing device, the terminal may receive, through a network interface, the first natural query statement entered via a client.

The foregoing described manner in which the terminal obtains the first natural query statement is merely used as an example for description, and does not constitute a limitation on the protection scope of this embodiment of this application.

S402: The terminal identifies a query entity and entity characteristic information in the first natural query statement, and determines, based on an identification result, whether the first natural query statement has complete semantics.

The entity characteristic information includes at least one of a relationship of the query entity and an attribute of the query entity.

The terminal may identify the query entity and the entity characteristic information in the first natural query statement in at least one of the following manners.

Manner 1: For a process in which the terminal identifies the query entity and the entity characteristic information in the first natural query statement, refer to the description of identifying the entity and the characteristic information in S2. Details are not described herein again.

Manner 2: After obtaining the first natural query statement, the terminal inputs the first natural query statement into a first preset model, to obtain an initial entity and initial characteristic information in the first natural query statement (herein, an entity obtained by using the first preset model is referred to as the initial entity, and characteristic information identified by using the first preset model is the initial characteristic information, to distinguish from the query entity and the entity characteristic information in S402). Then, the terminal extends, based on a preset algorithm and the first natural query statement, the initial entity and the initial characteristic information by increasing a quantity of words. Then, the terminal inputs an extended initial entity and extended initial characteristic information into a dictionary tree, to obtain the query entity and the entity characteristic information in the first natural query statement.

A method for the terminal to extend, based on a preset algorithm and the first natural query statement, the initial entity and the initial characteristic information by increasing the quantity of words may be as follows: The terminal extends, based on locations of the initial entity and the initial characteristic information in the first natural query statement, the initial entity and the initial characteristic information by increasing the quantity of words.

The terminal may extend the initial entity and the initial characteristic information leftward, or extend the initial entity and the initial characteristic information rightward, or the terminal may extend the initial entity and the initial characteristic information leftward and rightward simultaneously.

The quantity of words by which the terminal extends the initial entity and the initial characteristic information may be set by the terminal by default, or may be set by the user. This is not limited in this embodiment of this application.

For example, the terminal obtains the first natural query statement "What is the age of Wang Lanlan?". The terminal inputs the first natural query statement into the first preset model, and identifies that the initial entity in the first natural query statement is "Wang Lan", and the initial characteristic information (an attribute) is "age". If the quantity of words for extension preset by the terminal is 1, the terminal determines, based on a location of "Wang Lan" in the first natural query statement, to extend "Wang Lan" rightward by one word. Therefore, an extended initial entity is "Wang Lanlan".

It may be understood that there may be a plurality of entities in the first natural query statement. For example, the first natural query statement obtained by the terminal is "Whose height is greater, A or B?". In this case, the query entities identified by the terminal include "A" and "B". In this embodiment of this application, "A" is referred to as a primary query entity, and "B" is referred to as a secondary query entity.

For another example, the first natural query statement obtained by the terminal is "Whose area is larger between Beijing and Shanghai?". In this case, the query entities identified by the terminal include "Beijing" and "Shanghai". In this embodiment of this application, "Beijing" is referred to as a primary query entity, and "Shanghai" is referred to as a secondary query entity.

The primary query entity and the secondary query entity exist in one natural query statement at the same time. For example, the secondary query entity may be an entity that has a comparison relationship with the primary query entity.

Because a basic unit of a piece of knowledge includes at least one triplet, a question that has complete semantics needs to include at least two elements in the triplet. For example, for a triplet (entity, relationship, entity), a question that has complete semantics should include the entity and the relationship. For a triplet (entity, attribute, attribute value), a question that has complete semantics should include the entity and the attribute.

Therefore, when the terminal does not identify the query entity in the first natural query statement, the terminal determines that the first natural query statement misses a first query entity. Likewise, when the terminal does not identify the entity characteristic information in the first natural query statement, the terminal determines that the first natural query statement misses first entity characteristic information. In this case, the terminal determines that the first natural query statement does not have complete semantics. Alternatively, when the terminal cannot explicitly determine a purpose of the first natural query statement based on an identified relationship between query entities in the first natural query statement and with reference to the semantics, the terminal determines that the first natural query statement does not have complete semantics. In this case, the question answering procedure ends.

For example, the first natural query statement obtained by the terminal is "How about A?". In this case, the terminal identifies the query entity "A", but does not identify the entity characteristic information. Therefore, the terminal cannot predict the purpose of the user, and the terminal cannot answer the user.

For another example, the first natural query statement obtained by the terminal is "How about the daughter of A?". In this case, the terminal identifies the query entity "A" and the relationship "daughter" of the query entity. In this case, the terminal cannot predict, with reference to the semantics of the first natural query statement, whether the user wants to know who is the daughter of A or wants to know an attribute value of a specific attribute of the daughter of A. Therefore, the terminal still cannot query for a result for the user.

When the terminal identifies the query entity (for example, the first query entity) and the entity characteristic information (for example, the first entity characteristic information) based on the first natural query statement, where the first query entity and the first entity characteristic information can clearly describe the purpose in the first natural query statement, the terminal determines that the first natural query statement has complete semantics. In this case, the terminal performs the following step S403.

For example, the first natural query statement obtained by the terminal is "What is the height of A?". In this case, the terminal identifies the first query entity "A" and the attribute "height" of the first query entity. Therefore, the first query entity and the attribute of the first query entity clearly express the purpose in the first natural query statement. Therefore, the terminal determines that the first natural query statement has complete semantics.

S403: The terminal links the first query entity and the first entity characteristic information to the knowledge graph, and queries for a first result from the knowledge graph.

For a process in which the terminal links the first query entity and the first entity characteristic information to the knowledge graph, refer to the description in S2. Details are not described herein again.

It should be noted that, when the first query entity and the first entity characteristic information are identified in Manner 1 or Manner 2 in S402, the first query entity may be duplicate, and the first entity characteristic information may be duplicate. In this case, the terminal performs a deduplication operation on the first query entity and the first entity characteristic information that are identified in Manner 1 or Manner 2 in S402 (that is, separately filter the first query entity and the first entity characteristic information, to remove the duplicate query entity and the duplicate entity characteristic information), and link a deduplicated first query entity and deduplicated first entity characteristic information to the knowledge graph.

After linking the first query entity and the first entity characteristic information to the knowledge graph, the terminal can obtain an ID of a node corresponding to the first query entity in the knowledge graph, and obtain an ID of an edge corresponding to the first entity characteristic information in the knowledge graph.

Further, the terminal may query for the first result from the knowledge graph in any one of the following manners.

Manner 1: For a specific process in which the terminal obtains the first result from the knowledge graph based on the first natural query statement, the first query entity, and the first entity characteristic information, and returns the first result, refer to the implementation in S3. Details are not described herein again.

Manner 2: The terminal may alternatively obtain the first result from the knowledge graph by performing the following S410 and 411 (for details, refer to the following description), and return the first result.

S404: The terminal stores the first query entity and the first entity characteristic information.

After identifying the first query entity and the first entity characteristic information in the first natural query statement in S402, the terminal may store the first query entity and the first entity characteristic information.

Optionally, the terminal may perform S404 before S403, or may perform S404 after S403, or may simultaneously perform S403 and S404. This is not limited in this embodiment of this application.

For example, with reference to S402, if the terminal identifies that the first query entity is "A" and the attribute of the first query entity is "height", the terminal stores the first query entity "A" and the attribute "height" of the first query entity.

If the terminal identifies that the first query entity is "A" and the relationship of the first query entity is "daughter", the terminal stores the first query entity "A" and the relationship "daughter" of the first query entity.

If the terminal identifies that the first query entity is "A", the relationship of the first query entity is "daughter", and the attribute of the first query entity is "height", the terminal stores the first query entity "A", the relationship "daughter" of the first query entity, and the attribute "height" of the first query entity.

When the entity characteristic information has a limitation condition, in this embodiment of this application, the terminal stores the limitation condition and the entity characteristic information as a set when storing the entity characteristic information.

For example, the natural query statement obtained by the terminal is "Which vehicles have a price greater than 300,000?". The terminal identifies that the attribute of the first query entity is "price", an attribute value of the first query entity is "300,000", and the attribute value of the first query entity has the limitation condition "greater than". Therefore, the terminal stores the attribute of the first query entity, the attribute value of the first query entity, and the limitation condition of the attribute value of the first query entity as a set, that is, stores "price" "greater than" "300,000" as a set.

S405: The terminal outputs the first result.

After obtaining the first result, the terminal displays the first result.

Optionally, the terminal may display only the first result. For example, when the first natural query statement is "What is the height of A?", after the terminal finds the first result from the knowledge graph based on the first natural query statement, the terminal directly displays "180 cm" to the user.

The terminal may further convert, based on the stored query entity, the stored entity characteristic information, and the stored limitation condition of the entity characteristic information, the first result into a statement that has complete semantics and corresponds to the first natural query statement, and display the statement.

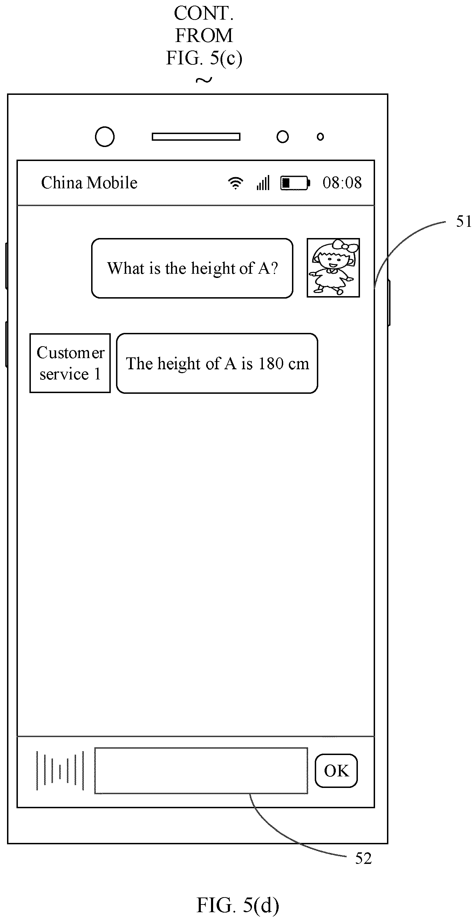

For example, as shown in FIG. 5(d), the terminal (the mobile phone) displays, in the display interface, a statement "The height of A is 180 cm" corresponding to the first result of the first natural query statement "What is the height of A?".

For another example, when the first natural query statement is "Which vehicles have a price greater than 300,000?", after the terminal finds the first result from the knowledge graph based on the first natural statement, the terminal converts, based on the stored first query entity, the stored first entity characteristic information, and the stored limitation condition of the first entity characteristic information, the first result into a statement "The vehicles with the price greater than 300,000 include a vehicle xx and a vehicle yy" that has complete semantics and corresponds to the first natural query statement, and displays "The vehicles with the price greater than 300,000 include a vehicle xx and a vehicle yy".

In addition, after obtaining the first result, the terminal may further play the first result or the statement corresponding to the first result in a voice form.

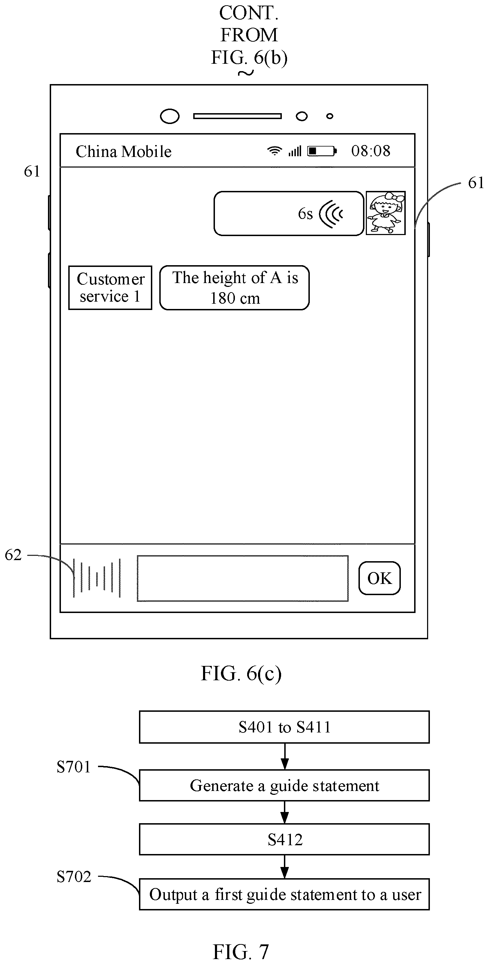

Specifically, the terminal may play the first result or the statement corresponding to the first result to the user through a speaker. When playing the first result or the statement corresponding to the first result to the user through the speaker, the terminal may further display the first result or the statement corresponding to the first result in a text form in the display interface, as shown in FIG. 6(c). This is not limited in this embodiment of this application.

The foregoing provides the description by merely using an example in which the terminal outputs the first result. This does not constitute a limitation on this embodiment of this application.

S406: The terminal obtains a second natural query statement after outputting the first result.

A specific process in which the terminal obtains the second natural query statement is similar to the process in which the terminal obtains the first natural query statement in S401. Details are not described herein again.

S407: The terminal identifies a query entity and entity characteristic information in the second natural query statement, and determines, based on an identification result, whether the second natural query statement has complete semantics.

For a process in which the terminal identifies the query entity and the entity characteristic information in the second natural query statement, and determines, based on the identification result, whether the second natural query statement has complete semantics, refer to the description in S402. Details are not described herein again.

When the terminal determines that the second natural query statement has complete semantics, the terminal searches the knowledge graph for a result of the second natural query statement with reference to the method in S403 to S405.

When the terminal determines that the second natural query statement does not have complete semantics, the terminal performs the following S408.

S408: The terminal determines a second query entity in the second natural query statement based on the first query entity, and determines second entity characteristic information in the second natural query statement based on the first entity characteristic information.

After the terminal determines that the second natural query statement does not have complete semantics, the terminal determines the second query entity in the second natural query statement based on the first query entity, and determines the second entity characteristic information in the second natural query statement based on the first entity characteristic information.

In one case, if the first entity characteristic information is the relationship of the first query entity, in this case, when the second natural query statement does not include the second query entity, the terminal determines the second query entity based on the first query entity. Specifically, the terminal uses the first query entity as the second query entity. When the second natural query statement does not include the second entity characteristic information, the terminal determines the second entity characteristic information based on the first entity characteristic information. Specifically, the terminal uses the relationship of the first query entity as the second entity characteristic information.

For example, if the first natural query statement is "Who is the daughter of A?", the terminal identifies that the first query entity is "A" and the relationship of the first query entity is "daughter". In this case, characteristic information in the first natural query statement is the relationship. Then, if the second natural query statement is, "Who is his sister?", the terminal identifies that the relationship of the second query entity is "sister", but cannot identify the entity. In this case, the terminal uses the first query entity "A" as the second query entity. The second query entity and the relationship of the second query entity constitute a question that has complete semantics: "Who is the sister of A?". If the second natural query statement is "How about B?", the terminal identifies that the second query entity is "B", but cannot identify the characteristic information. In this case, the terminal uses the relationship "daughter" of the first query entity as the relationship of the second query entity. The second query entity and the relationship of the second query entity constitute a question that has complete semantics: "Who is the daughter of B?".

In another case, if the first entity characteristic information is the attribute of the first query entity, in this case, when the second natural query statement does not include the entity, the terminal determines the second query entity based on the first query entity. Specifically, the terminal uses the first query entity as the second query entity. When the second natural query statement does not include the characteristic information, the terminal determines the second entity characteristic information based on the first entity characteristic information. Specifically, the terminal uses the attribute of the first query entity as the second entity characteristic information.

For example, if the first natural query statement is "What is the height of A?", the terminal identifies that the first query entity is "A" and the attribute of the first query entity is "height". In this case, characteristic information in the first natural query statement is the attribute. Then, if the second natural query statement is "How about the age?", the terminal identifies that the attribute of the second query entity is "age", but cannot identify the entity. In this case, the terminal uses the first query entity "A" as the second query entity. The second query entity and the attribute of the second query entity constitute a question that has complete semantics: "What is the age of A?". If the second natural query statement is "How about B?", the terminal identifies that the second query entity is "B", but cannot identify the characteristic information. In this case, the terminal uses the attribute "height" of the first query entity as the attribute of the second query entity. The second query entity and the attribute of the second query entity constitute a question that has complete semantics: "What is the height of B?".

In a third case, if the first entity characteristic information includes the attribute of the first query entity and the relationship of the first query entity, when the second natural query statement does not include the entity, the terminal determines the second query entity based on the first query entity. Specifically, the terminal uses the first query entity as the second query entity. When the second natural query statement does not include the characteristic information, the terminal determines the second entity characteristic information based on the first entity characteristic information. Specifically, the terminal uses the attribute of the first query entity and the relationship of the first query entity as the second entity characteristic information. When the second natural query statement does not include one of the relationship or the attribute of the characteristic information, for example, when the second natural query statement does not include the attribute, the terminal uses the attribute of the first query entity as the attribute of the second entity characteristic information. It should be noted that the second natural query statement does not include the second query entity and the attribute of the second query entity at the same time.

For example, if the first natural query statement is "What is the height of the daughter of A?", the terminal identifies that the first query entity is "A", the relationship of the first query entity is "daughter", and the attribute of the first query entity is "height".

Then, if the second natural query statement is "How about B?", the terminal identifies that the second query entity is "B", but cannot identify the relationship or the attribute. In this case, the terminal uses the relationship "daughter" of the first query entity as the relationship of the second query entity, and uses the attribute "height" of the first query entity as the attribute of the second query entity. The second query entity, the relationship of the second query entity, and the attribute of the second query entity constitute a question that has complete semantics: "What is the height of the daughter of B?".

Alternatively, if the second natural query statement is "How about his sister?", the terminal identifies that the relationship of the second query entity is "sister", but cannot identify the entity or the attribute. In this case, the terminal uses the first query entity "A" as the second query entity, and uses the attribute "height" of the first query entity as the attribute of the second query entity. The second query entity, the relationship of the second query entity, and the attribute of the second query entity constitute a question that has complete semantics: "What is the height of the sister of A?".

Alternatively, if the second natural query statement is "How about the age?", the terminal identifies that the attribute of the second query entity is "age", but cannot identify the entity or the relationship. In this case, the terminal uses the first query entity "A" as the second query entity, and uses the relationship "daughter" of the first query entity as the relationship of the second query entity. The second query entity, the relationship of the second query entity, and the attribute of the second query entity constitute a question that has complete semantics: "What is the age of the daughter of A?".

Alternatively, if the second natural query statement is "How about the daughter of B?", the terminal identifies that the second query entity is "B", and the relationship of the second query entity is "daughter", but cannot identify the attribute. In this case, the terminal uses the attribute "height" of the first query entity as the attribute of the second query entity. The second query entity, the relationship of the second query entity, and the attribute of the second query entity constitute a question that has complete semantics: "What is the height of the daughter of B?".

In a fourth case, if the first query entity includes a first primary query entity and a first secondary query entity, when the second natural query statement does not include a primary query entity, the terminal uses the first primary query entity as a second primary query entity. When the second natural query statement does not include a secondary query entity, the terminal uses the first secondary query entity as a second secondary query entity. When the second natural query statement does not include the characteristic information, the terminal uses the first entity characteristic information as the second entity characteristic information. The second natural query statement does not include the second query entity and the attribute of the second query entity at the same time.

For example, if the first natural query statement is "Whose height is greater, A or B?", the terminal identifies that the first query entities are "A" and "B", and the attribute of the first query entity is "height". "A" is the first primary query entity, and "B" is the first secondary query entity. Then, if the second natural query statement is "How about the age?", the terminal identifies the attribute "age" of the second query entity, but cannot identify the second query entity. In this case, the terminal uses the first primary query entity "A" as the second primary query entity, and uses the first secondary query entity "B" as the second secondary query entity. The second primary query entity, the second secondary query entity, and the attribute of the second query entity constitute a question that has complete semantics: "Whose age is higher, A or B?".

After determining the second query entity and the second entity characteristic information, the terminal links, based on the determined second query entity and the determined second entity characteristic information, the second query entity to a node in the knowledge graph and the second entity characteristic information to an edge in the knowledge graph. For a process in which the terminal links the second query entity and the second entity characteristic information to the knowledge graph, refer to the description in S402. Details are not described herein again.

S409: The terminal determines a question type of the second natural query statement, and determines, based on the second natural query statement, the second query entity, and the second entity characteristic information, a knowledge graph query statement corresponding to the second natural query statement.

Specifically, the terminal inputs a second natural query statement that has complete semantics into a preset second preset model, to determine the question type of the second natural query statement.

The second preset model is obtained by a developer through training in advance based on a large amount of question data, and is used to determine a question type of a natural query statement. For example, a format of the second preset model may be (question, question type).

The question type may be a single-hop search for an attribute, a single-hop search for a relationship, a two-hop search for an attribute, a two-hop search for an entity attribute relationship, or the like.

The single-hop search for an attribute indicates that the attribute can be determined through hopping once in the knowledge graph. The single-hop search for a relationship means that a related entity can be determined through hopping once in the knowledge graph. The two-hop search for an attribute indicates that, in the knowledge graph, after a related entity is determined through hopping once, the attribute of the related person is searched for through hopping one more time. The two-hop search for an entity attribute relationship indicates that, in the knowledge graph, an attribute of an entity A is determined through hopping once, an attribute of an entity B is determined through hopping one more time, and then two attribute values are compared to obtain a result.

For example, if the second natural query statement that has complete semantics is "What is the height of A?", the question type is the "single-hop search for an attribute". In other words, an attribute of the entity A can be determined through hopping once in the knowledge graph.

If the second natural query statement is "Who is the daughter of A?", the question type is the "single-hop search for a relationship". In other words, a related person of the entity A can be determined through hopping once in the knowledge graph.

If the second natural query statement is "What is the height of the daughter of A?", the question type is the "two-hop search for an attribute". In other words, in the knowledge graph, after a related person of the entity A is determined through hopping once, an attribute of the related person is determined through hopping one more time.

If the second natural query statement is "Whose age is higher, A or B?", the question type is the "two-hop search for an entity attribute relationship". In other words, in the knowledge graph, an attribute of the entity A is determined through hopping once, an attribute of the entity B is determined through hopping one more time, and then two attribute values are compared to obtain a query result.

In addition, the terminal may determine, in a conventional manner, a knowledge graph query statement corresponding to the second natural query statement that has complete semantics. For details, refer to the description of S3. Details are not described herein again.

The terminal may alternatively determine, in the following manner, the knowledge graph query statement (that is, a target query statement in this embodiment of this application) corresponding to the second natural query statement that has complete semantics.

It should be noted that the knowledge graph query statement corresponding to the second natural query statement described in this embodiment of this application is the knowledge graph query statement corresponding to the second natural query statement that has complete semantics.

Specifically, the terminal first determines a question template of the second natural query statement based on the second natural query statement that has complete semantics, the second query entity, and the second entity characteristic information.

For example, if the second natural query statement that has complete semantics is "What is the height of A?", the terminal obtains the entity obtained "A" and the attribute "height" by using the method in S402. In this case, the terminal may abstract the second natural query statement as the question template "{person entity} has {height attribute}".

Then, the terminal traverses question templates in a question template library, and calculates a similarity between each question template in the question template library and the question template of the second natural query statement. Further, the terminal determines a question template that is in the question template library and that has a highest similarity to the question template of the second natural query statement as a target question template.

In this embodiment of this application, the question template library is preset by the developer. The question template library includes m question templates and m knowledge graph query statements, the m question templates correspond to the m knowledge graph query statements, and each of the m knowledge graph query statements uniquely corresponds to one question template. A format of the question template library may be (question template, query statement). The knowledge graph query statement includes a query language part and a template part. For example, a knowledge graph query statement for querying a height is: select y from database where <{person entity}x> and <{height attribute}y >, where "select y from database where <x> and <y>" is the language part, and {person entity} and {height attribute} belong to the template part.

The terminal determines, from the question template library based on a correspondence between a question template and a knowledge graph query statement, and the target question template of the second natural query statement, the knowledge graph query statement corresponding to the second natural query statement.

For example, the target question template determined by the terminal from the question template library based on the question template of the second natural query statement is "{person entity} has {height attribute}". Therefore, a query statement corresponding to the target question template determined by the terminal is: select y from database where <{person entity}x> and <{height attribute}y>.

S410: The terminal queries for a second result from the knowledge graph based on the second query entity, the second entity characteristic information, the knowledge graph query statement corresponding to the second natural query statement, and the question type of the second natural query statement.

Specifically, the terminal replaces, based on the question type of the second natural query statement, the template part in the knowledge graph query statement with an ID of a node corresponding to the second query entity in the knowledge graph and an ID of an edge corresponding to the second entity characteristic information in the knowledge graph. The terminal queries for the second result from the knowledge graph based on a knowledge graph query statement in which IDs are replaced, and returns the second result.

For example, the second natural query statement that has complete semantics is "What is the height of A?". The second query entity is "A", and the ID of the node corresponding to the second query entity in the knowledge graph is "ID (A)". The attribute of the second query entity is "height", and the ID of the edge corresponding to the attribute of the second query entity in the knowledge graph is "ID (height)". In this case, the knowledge graph query statement obtained by the terminal is: select y from database where <{person entity }x> and <{height attribute}y>. In addition, the question type of the second natural query statement is the "single-hop search for an attribute".

Therefore, based on the question type "single-hop search for an attribute" of the second natural query statement, the terminal replaces the template part in the knowledge graph query statement with the ID of the node corresponding to the second query entity in the knowledge graph and the ID of the edge corresponding to the attribute of the second query entity in the knowledge graph. In this way, the knowledge graph query statement is changed as: select ID (height) from database where ID (A). The terminal queries for the result from the knowledge graph based on the knowledge graph query statement in which IDs are replaced, and returns the second result.

For another example, the second natural query statement that has complete semantics is "What is the height of the daughter of A?". The second query entity is "A", and the ID of the node corresponding to the second query entity in the knowledge graph is "ID (A)". The relationship of the second query entity is "daughter", and an ID of an edge corresponding to the relationship of the second query entity in the knowledge graph is "ID (daughter)". The attribute of the second query entity is "height", and the ID of the edge corresponding to the attribute of the second query entity in the knowledge graph is "ID (height)". In this case, the knowledge graph query statement obtained by the terminal is: select y from database where <{person entity }x> and <{height attribute }y>. In addition, the question type of the second natural query statement is the "two-hop search for an attribute".

Therefore, based on the question type "two-hop search for an attribute" of the second natural query statement, the terminal replaces the template part in the knowledge graph query statement with a function formed by the ID of the node corresponding to the second query entity in the knowledge graph and the ID of the edge corresponding to the relationship of the second query entity in the knowledge graph, and the ID of the edge corresponding to the attribute of the second query entity in the knowledge graph.

In this way, the knowledge graph query statement is changed as: select ID (height) from database where ID (X) and (ID (A), ID (daughter), ID (X)). "ID (X) and (ID (A), ID (daughter), ID (X))" is the function determined based on the "two-hop search for an attribute", where "X" indicates a related person (herein, the daughter) entity of the second query entity "A", and ID (X) indicates the ID of the node corresponding to the related person entity in the knowledge graph.

Finally, the terminal queries for the result from the knowledge graph based on the knowledge graph query statement in which IDs are replaced, and returns the second result.

S411: The terminal stores the second query entity and the second entity characteristic information.

After determining the second query entity and the second entity characteristic information in the second natural query statement in S408, the terminal may store the second query entity and the second entity characteristic information.

Optionally, the terminal may perform S411 while performing either of S409 and S410, or the terminal may perform S411 after S409 and S410. This is not limited in this application.

The terminal stores the second query entity and the second entity characteristic information that are determined in S408, to update the first query entity and the first entity characteristic information.

Specifically, the terminal replaces the first query entity with the second query entity, and replaces the first entity characteristic information with the second entity characteristic information.

If the first query entity includes the first primary query entity and the first secondary query entity, and the second query entity includes the second primary query entity and the second secondary query entity, the terminal replaces the first primary query entity with the second primary query entity, and replaces the first secondary query entity with the second secondary query entity. If the first query entity includes the first primary query entity and the first secondary query entity, and the second query entity includes one entity, the terminal replaces the first primary query entity with the second query entity. If the first query entity includes one entity, and the second query entity includes the second primary query entity and the second secondary query entity, the terminal replaces the first query entity with the second primary query entity.

S412: The terminal outputs the second result.

Further, the terminal outputs the second result to the user. For a specific implementation, refer to S405. Details are not described herein again.

In this way, according to the question answering method based on the knowledge graph provided in this embodiment of this application, when the terminal receives a natural query statement (for example, the second natural query statement) that is entered by the user and that does not have complete semantics, the terminal can supplement the semantics of the current question with reference to pre-stored query entity and pre-stored entity characteristic information (for example, the first query entity and the first entity characteristic information in this embodiment of this application). Further, the terminal queries the knowledge graph based on a question that has complete semantics, and outputs a query result to the user, to effectively resolve a problem that the terminal cannot obtain the query result of the natural query statement that does not have complete semantics.

Optionally, the terminal deletes stored query entity and stored entity characteristic information (for example, the first query entity and the first entity characteristic information, or the second query entity and the second entity characteristic information). Specifically, if the terminal does not obtain a new natural query statement within first preset duration, and storage duration of an entity and characteristic information exceeds the first preset duration, the terminal deletes the stored entity and the stored characteristic information, or the terminal sets the stored entity and the stored characteristic information to be invalid. This effectively improves utilization of storage space of the terminal, and improves timeliness of a question answering system. The first preset duration may be set according to an actual requirement. This is not limited in the embodiment of this application.

In addition, the question answering method based on the knowledge graph provided in this embodiment of this application may be further used for dialog guide. In the method, the terminal can guide the user according to historical question information of the user and a preset guide policy.

The guide policy is preset by the developer according to a domain requirement, or may be customized by the user. The guide policy is stored on the terminal.

FIG. 7 is a schematic flowchart of another question answering method based on a knowledge graph according to an embodiment of this application.

With reference to FIG. 4A and FIG. 4B, as shown in FIG. 7, the question answering method based on the knowledge graph provided in this embodiment of this application includes the following steps.

A terminal performs S401 to S404. Specifically, in S404, the terminal stores a first query entity and first entity characteristic information in any one of the following manners.

Manner a: The terminal stores the first query entity and the first entity characteristic information in first storage space, and stores the first query entity and the first entity characteristic information in second storage space, where the first storage space is used to store the latest query entity and the latest entity characteristic information, and the second storage space is used to store a historical query entity and historical entity characteristic information that are determined by the terminal.

Manner b: The terminal stores the first query entity and the first entity characteristic information in third storage space, where the third storage space is used to store a query entity and entity characteristic information that have been determined by the terminal, and mark the latest query entity and the latest entity characteristic information.

Then, the terminal performs S405 to S411.

In S411, specifically, if the terminal stores the first query entity and the first entity characteristic information in Manner a in S404, the terminal stores a second query entity and second entity characteristic information in the second storage space. In addition, the terminal updates the first query entity in the first storage space to the second query entity, and updates the first entity characteristic information in the first storage space to the second entity characteristic information. For an update process, refer to S408. Details are not described herein again.

If the terminal stores the first query entity and the first entity characteristic information in Manner b in S404, the terminal stores a second query entity and second entity characteristic information in the third storage space, and marks the second query entity as the latest query entity, and marks the second entity characteristic information as the latest entity characteristic information.

After S411, the question answering method based on the knowledge graph provided in this embodiment of this application further includes S701.

S701: The terminal generates a guide statement.

The terminal generates the guide statement based on the stored first query entity, the stored first query entity information, the stored second query entity, the stored second query entity information, and the guide policy.

Specifically, the first query entity, the first query entity information, the second query entity, and the second query entity information may reflect a purpose why a user puts forward to a question and a question that the user is interested in. Therefore, the terminal generates the guide statement based on the first query entity, the first query entity information, the second query entity, the second query entity information, and the guide policy, to guide a subsequent operation of the user.

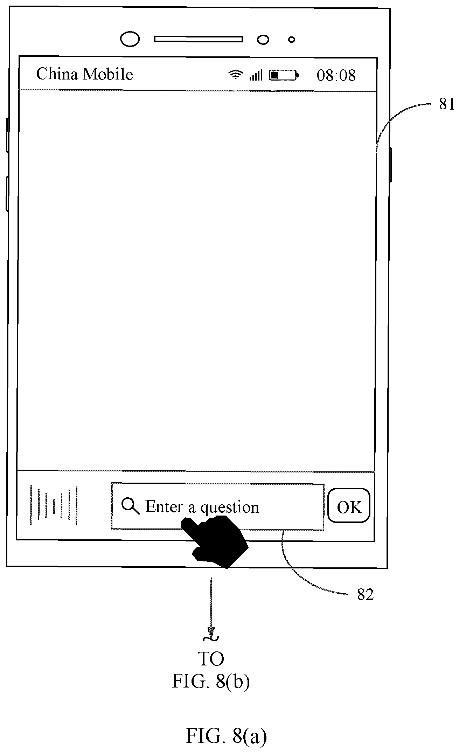

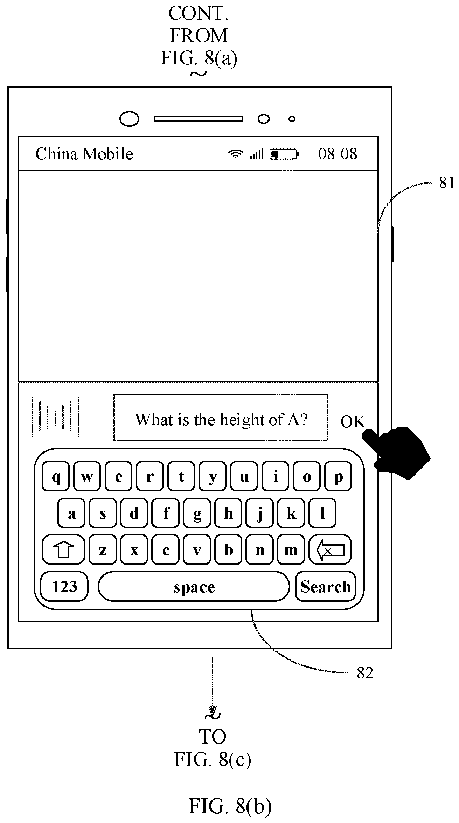

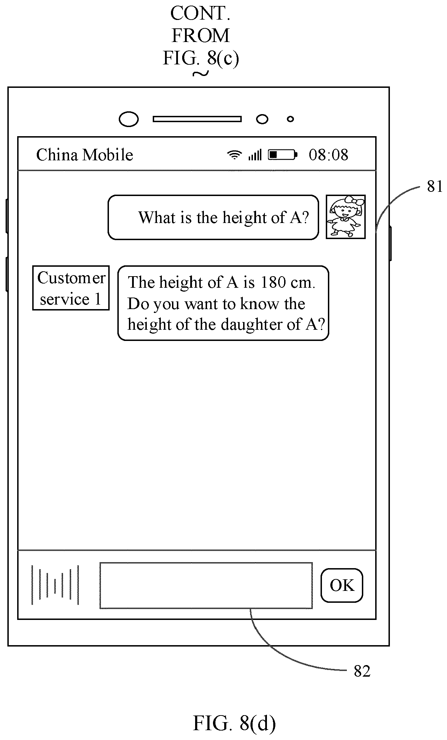

For example, the terminal is a mobile phone. As shown in FIG. 8(a), the user enters a third natural query statement "What is the height of A?" in a question-answering input box 82 in a question-answering interface 81 on the mobile phone. The mobile phone determines that a third query entity is "A", and third entity characteristic information is "height". Then, as shown in FIG. 8(b), the mobile phone finds a third result of the third natural query statement from the knowledge graph based on the third query entity and the third entity characteristic information, and outputs the third result to the user.

In addition, if the guide policy is: when an entity is A, guide the "daughter" of A, the terminal generates, based on the third query entity, the third entity characteristic information in the third natural query statement, and the guide policy, a first guide statement "Whether to know the height of the daughter of A?".

Then, the terminal performs S412.

After S412, the question answering method based on the knowledge graph provided in this embodiment of this application further includes S702.

S702: The terminal outputs the first guide statement to the user.

For a specific manner in which the terminal outputs the first guide statement, refer to a specific implementation in which the terminal outputs the second result to the user in S412. Details are not described herein again.

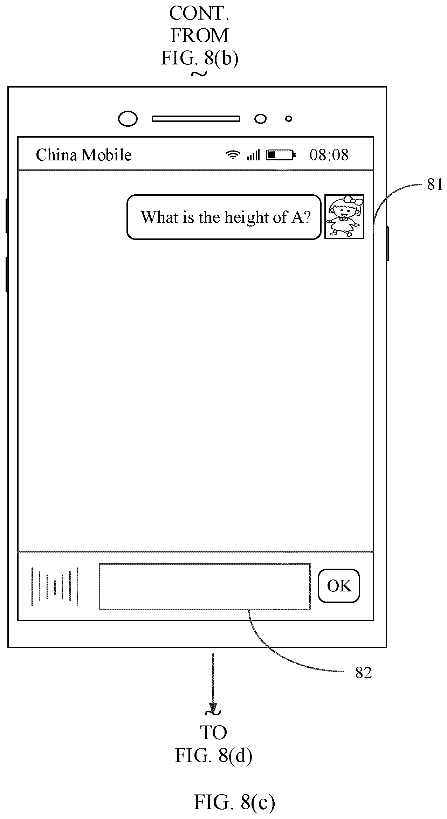

For example, refer to FIG. 8(a) to FIG. 8(d). As shown in FIG. 8(c), the terminal displays the third result and the first guide statement to the user in the display interface on the mobile phone.

Optionally, if the user accepts guide recommendation of the terminal, the user enters content such as "Yes" or "OK" to the mobile phone. For a specific process, refer to S401. Details are not described herein again.

It may be understood that S702 may be performed simultaneously with S412, or may be performed after S412. This is not limited in this application.

Optionally, the terminal may delete stored historical information, including information such as a query entity (for example, the first query entity or the second query entity) and entity characteristic information (for example, a first characteristic type and a second characteristic type), to effectively improve utilization of storage space of the terminal, and improve timeliness of a question answering system.

In a possible implementation, the terminal determines that duration from a moment at which the user last asks a question to the terminal to a current moment exceeds first preset duration, and the terminal obtains no new natural query statement within the first preset duration. In this case, the terminal deletes the historical information stored in a process of interacting with the user, or the terminal sets the historical information stored in the process of interacting with the user to be invalid.

In another possible implementation, when the terminal determines that duration from a moment at which the first natural query statement is obtained to a current moment exceeds second preset duration, the terminal deletes the historical information stored before duration 1, or the terminal sets the historical information stored before duration 1 to be invalid. The duration 1 is less than the second preset duration, and the duration 1 is duration from a moment 1 to the current moment. The moment 1 is any moment in a process of interaction between the terminal and the user.

In still another possible implementation, when the terminal determines that a quantity of stored pieces of historical information is greater than a first threshold, the terminal deletes, from the historical information with the earliest storage time, n pieces of historical information based on storage time of the historical information or sets n pieces of historical information to be invalid, where n is a positive integer greater than or equal to 1, and n is less than a first threshold. The first threshold may be specifically set according to an actual requirement. This is not limited in this application.

In conclusion, this embodiment of this application provides the question answering method based on the knowledge graph. When receiving a natural query statement that is entered by the user and that does not have complete semantics, the terminal can supplement the semantics of the current question with reference to a pre-stored entity and pre-stored characteristic information (for example, the first query entity and the first entity characteristic information in this embodiment of this application). Further, the terminal queries the knowledge graph based on a question that has complete semantics, and outputs the result to the user. Compared with the conventional technology in which an answer fed back to a user is usually inaccurate because a conventional question answering system only establishes a one-to-one relationship mapping network in a database, and connection between knowledge points is very weak, this embodiment of this application provides the question answering method based on the knowledge graph, which can quickly and accurately feed back the answer to the user, and effectively resolve a problem that the terminal cannot obtain the query result of the natural query statement that does not have complete semantics. In addition, in the question answering method based on the knowledge graph provided in this embodiment of this application with reference to the guide policy, the terminal can perform guide recommendation to the user based on historical query information of the user and the guide policy. This improves interaction experience between the user and the terminal.

The foregoing mainly describes the solutions provided in the embodiments of this application from a perspective of the methods. To implement the foregoing functions, corresponding hardware structures and/or software modules for performing the functions are included. A person skilled in the art should be easily aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the embodiments of this application, the question answering apparatus based on the knowledge graph may be divided into function modules based on the examples in the foregoing method. For example, each function module corresponding to each function may be obtained through division, or two or more functions may be integrated into one processing module. The integrated module may be implemented in a form of hardware, or may be implemented in a form of a software function module. It should be noted that, in the embodiments of this application, division into the modules is an example, and is merely a logical function division. Another division manner may be used in actual implementation.

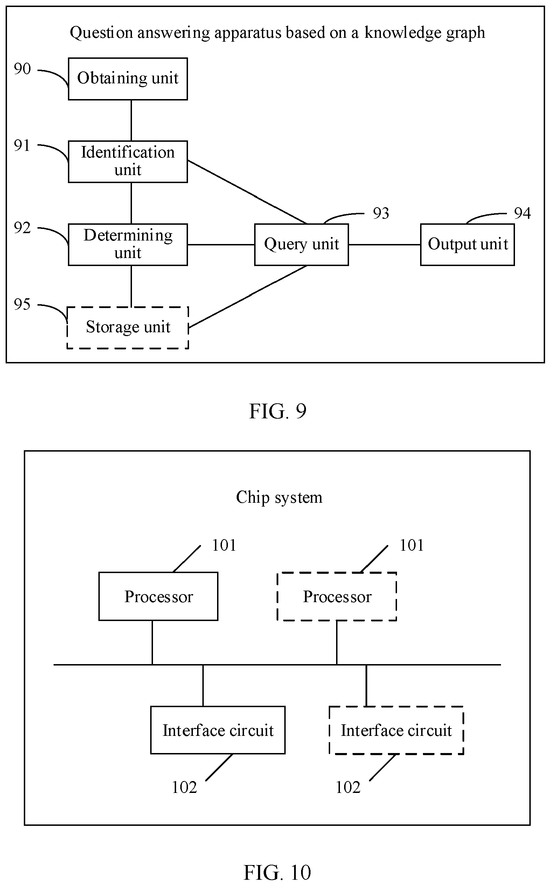

FIG. 9 is a schematic diagram of a structure of a question answering apparatus based on a knowledge graph according to an embodiment of this application. The question answering apparatus is configured to perform question answering tracking based on the knowledge graph and dialog guide, for example, configured to perform the method shown in FIG. 4A and FIG. 4B or FIG. 7. The question answering apparatus may include an obtaining unit 90, an identification unit 91, a determining unit 92, a query unit 93, and an output unit 94.

The obtaining unit 90 is configured to obtain a first natural query statement, where the first natural query statement includes a first query entity and first entity characteristic information, and the first entity characteristic information includes at least one of an attribute of the first query entity or a relationship of the first query entity. The query unit 93 is configured to query the knowledge graph based on the first query entity and the first entity characteristic information, to obtain a first result. The output unit 94 outputs the first result found by the query unit 93. The obtaining unit 90 is further configured to obtain a second natural query statement. The determining unit 92 is configured to determine a missing part in the second natural query statement based on the first query entity or the first entity characteristic information. The query unit 93 is further configured to query the knowledge graph based on the missing part in the second natural query statement determined by the determining unit 92, to obtain a second result. The output unit 94 is further configured to output the second result found by the query unit 93.

For example, with reference to FIG. 4A and FIG. 4B, the obtaining unit 90 may be configured to perform S401 and S406. The determining unit 92 may be configured to perform S408. The query unit 93 is configured to perform S403 and S410. The output unit 94 may be configured to perform S405 and S412.

Optionally, the determining unit 92 is further configured to: before determining the missing part in the second natural query statement based on the first query entity or the first entity characteristic information, determine that the second natural query statement misses a second query entity or second entity characteristic information, where the second entity characteristic information includes at least one of an attribute of the second query entity or a relationship of the second query entity.

The determining unit 92 is specifically configured to: if the second natural query statement misses the second query entity, determine the second query entity based on the first query entity.

The determining unit 92 is further specifically configured to: if the second natural query statement misses the second entity characteristic information, determine the second entity characteristic information based on the first characteristic information.

For example, with reference to FIG. 4A and FIG. 4B, the determining unit 92 may be configured to perform S408.

Optionally, the identification unit 91 is configured to identify a query entity and entity characteristic information in the second natural query statement according to a preset rule, to obtain the second query entity or the second entity characteristic information. With reference to FIG. 4A and FIG. 4B, the identification unit 91 may be configured to perform S402 and S407.

The determining unit 92 is specifically configured to: if the identification unit 91 does not obtain the second query entity, determine that the second natural query statement misses the second query entity; or if the identification unit 91 does not obtain the second entity characteristic information, determine that the second natural query statement misses the second entity characteristic information.

For example, with reference to FIG. 4A and FIG. 4B, the identification unit 91 and the determining unit 92 may be configured to perform S402 and S407.

Optionally, the identification unit 91 is specifically configured to: input the second natural query statement to a first preset model, to obtain an initial query entity or initial entity characteristic information; and
if the initial query entity is obtained, extend the initial query entity based on a preset algorithm and the second natural query statement; and obtain the second query entity based on a preset dictionary and an extended initial query entity; or if the initial entity characteristic information is obtained, extend the initial entity characteristic information based on a preset algorithm and the second natural query statement; and obtain the second entity characteristic information based on a dictionary and extended initial entity characteristic information, where the dictionary corresponds to the knowledge graph.

For example, with reference to FIG. 4A and FIG. 4B, the identification unit 91 may be configured to perform S402 and S407.

Optionally, the determining unit 92 is further configured to determine a question type of the second natural query statement based on the second query entity, the second entity characteristic information, and the second natural query statement by using a preset question model.

For example, with reference to FIG. 4A and FIG. 4B, the determining unit 92 may be configured to perform S409.

Optionally, the determining unit 92 is further configured to determine a question template of the second natural query statement based on the second natural query statement and the missing part in the second natural query statement.

The determining unit 92 is further configured to determine a target query statement from a preset question template library. The question template library includes m question templates and m query statements, each of the m query statements uniquely corresponds to one question template, and m is a positive integer. The target query statement corresponds to a target question template, and the target question template is a template that is in the question template library and that has a highest similarity to the question template of the second natural query statement.

The query unit 93 is further configured to query the knowledge graph based on the question type of the second natural query statement and the target query statement that are determined by the determining unit 92, to obtain the second result.

For example, with reference to FIG. 4A and FIG. 4B, the determining unit 92 may be configured to perform S409, and the query unit 93 may be configured to perform S410.

Optionally, the determining unit 92 is further configured to determine a guide statement based on the first query entity, the first entity characteristic information, the missing part in the second natural query statement, the second natural query statement, and a preset guide policy, where the guide statement is used to guide a next operation of a user. The output unit 94 is further configured to output the guide statement determined by the determining unit 92.

For example, with reference to FIG. 7, the determining unit 92 may be configured to perform S701, and the output unit 94 may be configured to perform S702.

Certainly, the question answering apparatus based on the knowledge graph provided in this embodiment of this application includes but is not limited to the foregoing units. For example, the question answering apparatus may further include a storage unit 95. The storage unit 95 may be configured to store program code of the question answering apparatus, and may be further configured to store data obtained in a running process of the question answering apparatus, for example, the first query entity, the first entity characteristic information, the second query entity, and the second entity characteristic information.

In an example, with reference to FIG. 3, functions implemented by the obtaining unit 90 and the output unit 94 in the question answering apparatus based on the knowledge graph are the same as functions of the communications component 33 in FIG. 3. Functions implemented by the identification unit 91, the determining unit 92, and the query unit 93 are the same as functions of the processor 31 in FIG. 3. A function implemented by the storage unit 95 is the same as a function of the memory 32 in FIG. 3.

An embodiment of this application further provides a chip system. As shown in FIG. 10, the chip system includes at least one processor 101 and at least one interface circuit 102. The processor 101 and the interface circuit 102 may be connected to each other through a line. For example, the interface circuit 102 may be configured to receive a signal from another apparatus (for example, a memory of a question answering apparatus based on a knowledge graph). For another example, the interface circuit 102 may be configured to send a signal to another apparatus (for example, the processor 101). For example, the interface circuit 102 may read instructions stored in the memory, and send the instructions to the processor 101. When the instructions are executed by the processor 101, the question answering apparatus is enabled to perform the steps in the foregoing embodiments. Certainly, the chip system may further include another discrete device. This is not specifically limited in this embodiment of this application.

Another embodiment of this application further provides a non-volatile storage medium. The non-volatile storage medium stores instructions. When the instructions are run on a question answering apparatus based on a knowledge graph, the question answering apparatus performs the steps performed by the terminal in the method procedure shown in the foregoing method embodiments.

In some embodiments, the disclosed method may be implemented as computer program instructions encoded in a machine-readable format on a non-volatile storage medium or encoded on another non-transitory medium or product.

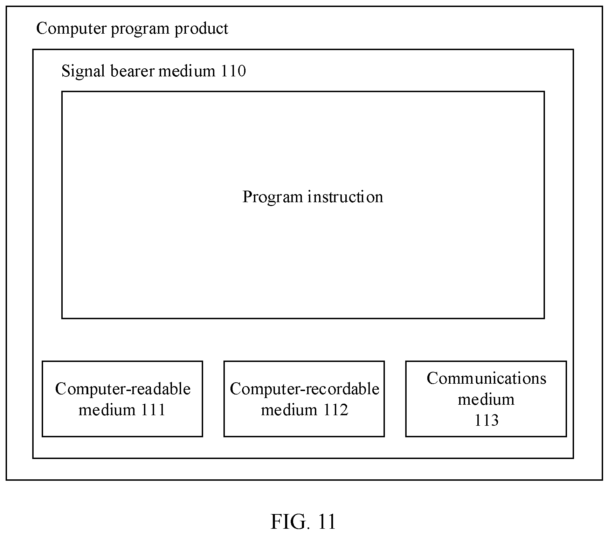

FIG. 11 schematically shows a conceptual partial view of a computer program product according to an embodiment of this application. The computer program product includes a computer program used to execute a computer process on a computing device.

In an embodiment, the computer program product is provided by using a signal bearer medium 110. The signal bearer medium 110 may include one or more program instructions. When the program instructions are run by one or more processors, the functions or some of the functions described for FIG. 4A and FIG. 4B or FIG. 7 may be provided. Therefore, for example, one or more features of S401 to S412 in FIG. 4A and FIG. 4B may be borne by one or more instructions associated with the signal bearer medium 110. In addition, the program instructions in FIG. 11 also described as example instructions.

In some examples, the signal bearer medium 110 may include a computer-readable medium 111, for example, but not limited to, a hard disk drive, a compact disc (CD), a digital video disc (DVD), a digital tape, a memory, a read-only memory (read-only memory, ROM), or a random access memory (random access memory, RAM).

In some implementations, the signal bearer medium 110 may include a computer-recordable medium 112, for example, but not limited to, a memory, a read/write (R/W) CD, or an R/W DVD.

In some implementations, the signal bearer medium 110 may include a communications medium 113, for example, but is not limited to a digital and/or analog communications medium (for example, an optical fiber cable, a waveguide, a wired communication link, or a wireless communication link).

The signal bearer medium 110 may be conveyed by a wireless-form communications medium 113 (for example, a wireless communications medium that complies with the IEEE 802.11 standard or another transmission protocol). The one or more program instructions may be, for example, one or more computer-executable instructions or one or more logic implementation instructions.

In some examples, for example, the question answering apparatus based on the knowledge graph described for FIG. 4A and FIG. 4B or FIG. 7 may be configured to provide various operations, functions, or actions in response to one or more program instructions in the computer-readable medium 111, the computer-recorded medium 112, and/or the communications medium 113.

It should be understood that the arrangement described herein is merely used as an example. Thus, a person skilled in the art appreciates that another arrangement and another element (for example, a machine, an interface, a function, a sequence, and a group of functions) can be used to replace the arrangement, and some elements may be omitted together depending on a desired result. In addition, many of the described elements are functional entities that can be implemented as discrete or distributed components, or implemented in any suitable combination at any suitable location in combination with another component.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer-executable instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of this application. Any variation or replacement readily figured out by a person skilled in the art based on the specific implementations provided in this application shall fall within the protection scope of this application.

## Claims

1. A question answering method based on a knowledge graph, comprising:
obtaining a first natural query statement, wherein the first natural query statement comprises a first query entity and first entity characteristic information, and the first entity characteristic information comprises at least one of an attribute of the first query entity or a relationship of the first query entity;
querying the knowledge graph based on the first query entity and the first entity characteristic information to obtain a first result, and outputting the first result;
obtaining a second natural query statement;
determining, based on the first query entity or the first entity characteristic information, a missing part in the second natural query statement; and
querying the knowledge graph based on the missing part in the second natural query statement to obtain a second result, and outputting the second result.

2. The question answering method according to claim 1, wherein before the determining, based on the first query entity or the first entity characteristic information, a missing part in the second natural query statement, the question answering method further comprises:
determining that the second natural query statement misses a second query entity or second entity characteristic information, wherein the second entity characteristic information comprises at least one of an attribute of the second query entity or a relationship of the second query entity; and
if the second natural query statement misses the second query entity, the determining, based on the first query entity or the first entity characteristic information, a missing part in the second natural query statement comprises: determining the second query entity based on the first query entity; or
if the second natural query statement misses the second entity characteristic information, the determining, based on the first query entity or the first entity characteristic information, a missing part in the second natural query statement comprises: determining the second entity characteristic information based on the first characteristic information.

3. The question answering method according to claim 2, wherein the determining that the second natural query statement misses a second query entity or second entity characteristic information comprises:
identifying a query entity and entity characteristic information in the second natural query statement according to a preset rule, to obtain the second query entity or the second entity characteristic information; and
if the second query entity is not obtained, determining that the second natural query statement misses the second query entity; or
if the second entity characteristic information is not obtained, determining that the second natural query statement misses the second entity characteristic information.

4. The question answering method according to claim 3, wherein the identifying a query entity and entity characteristic information in the second natural query statement according to a preset rule, to obtain the second query entity or the second entity characteristic information comprises:
inputting the second natural query statement into a first preset model, to obtain an initial query entity or initial entity characteristic information; and
if the initial query entity is obtained, extending the initial query entity based on a preset algorithm and the second natural query statement; and determining the second query entity based on a preset dictionary and an extended initial query entity; or
if the initial entity characteristic information is obtained, extending the initial entity characteristic information based on a preset algorithm and the second natural query statement; and determining the second entity characteristic information based on a dictionary and extended initial entity characteristic information, wherein
the dictionary corresponds to the knowledge graph.

5. The question answering method according to any one of claims 2 to 4, wherein the question answering method further comprises:
determining a question type of the second natural query statement based on the second query entity, the second entity characteristic information, and the second natural query statement by using a preset question model.

6. The question answering method according to claim 5, wherein the querying the knowledge graph based on the missing part in the second natural query statement to obtain a second result comprises:
determining a question template of the second natural query statement based on the second natural query statement and the missing part in the second natural query statement;
determining a target query statement from a preset question template library, wherein the question template library comprises m question templates and m query statements, each of the m query statements uniquely corresponds to one question template, m is a positive integer, the target query statement corresponds to a target question template, and the target question template is a template that is in the question template library and that has a highest similarity to the question template of the second natural query statement; and
querying the knowledge graph based on the question type of the second natural query statement and the target query statement to obtain the second result.

7. The question answering method according to any one of claims 1 to 6, wherein the question answering method further comprises:
determining a guide statement based on the first query entity, the first entity characteristic information, the missing part in the second natural query statement, the second natural query statement, and a preset guide policy, wherein the guide statement is used to guide a next operation of a user; and
outputting the guide statement.

8. A question answering apparatus based on a knowledge graph, comprising:
an obtaining unit, configured to obtain a first natural query statement, wherein the first natural query statement comprises a first query entity and first entity characteristic information, and the first entity characteristic information comprises at least one of an attribute of the first query entity or a relationship of the first query entity;
a query unit, configured to query the knowledge graph based on the first query entity and the first entity characteristic information, to obtain a first result;
an output unit, configured to output the first result found by the query unit, wherein
the obtaining unit is further configured to obtain a second natural query statement; and
a determining unit, configured to determine a missing part in the second natural query statement based on the first query entity or the first entity characteristic information, wherein
the query unit is further configured to query the knowledge graph based on the missing part in the second natural query statement determined by the determining unit, to obtain a second result; and
the output unit is further configured to output the second result found by the query unit.

9. The question answering apparatus according to claim 8, wherein
the determining unit is further configured to: before determining the missing part in the second natural query statement, determine that the second natural query statement misses a second query entity or second entity characteristic information, wherein the second entity characteristic information comprises at least one of an attribute of the second query entity or a relationship of the second query entity; and
the determining unit is specifically configured to: if the second natural query statement misses the second query entity, determine the second query entity based on the first query entity; and is specifically configured to: if the second natural query statement misses the second entity characteristic information, determine the second entity characteristic information based on the first characteristic information.

10. The question answering apparatus according to claim 9, wherein the question answering apparatus further comprises an identification unit, wherein
the identification unit is configured to identify a query entity and entity characteristic information in the second natural query statement according to a preset rule, to obtain the second query entity or the second entity characteristic information; and
the determining unit is specifically configured to: if the identification unit does not obtain the second query entity, determine that the second natural query statement misses the second query entity; or if the identification unit does not obtain the second entity characteristic information, determine that the second natural query statement misses the second entity characteristic information.

11. The question answering apparatus according to claim 10, wherein the identification unit is specifically configured to:
input the second natural query statement into a first preset model, to obtain an initial query entity or initial entity characteristic information; and
if the initial query entity is obtained, extend the initial query entity based on a preset algorithm and the second natural query statement; and obtain the second query entity based on a preset dictionary and an extended initial query entity; or
if the initial entity characteristic information is obtained, extend the initial entity characteristic information based on a preset algorithm and the second natural query statement; and obtain the second entity characteristic information based on a dictionary and extended initial entity characteristic information, wherein
the dictionary corresponds to the knowledge graph.

12. The question answering apparatus according to any one of claims 9 to 11, wherein
the determining unit is further configured to determine a question type of the second natural query statement based on the second query entity, the second entity characteristic information, and the second natural query statement by using a preset question model.

13. The question answering apparatus according to claim 12, wherein
the determining unit is further configured to determine a question template of the second natural query statement based on the second natural query statement and the missing part in the second natural query statement;
the determining unit is further configured to determine a target query statement from a preset question template library, wherein the question template library comprises m question templates and m query statements, each of the m query statements uniquely corresponds to one question template, m is a positive integer, the target query statement corresponds to a target question template, and the target question template is a template that is in the question template library and that has a highest similarity to the question template of the second natural query statement; and
the query unit is further configured to query the knowledge graph based on the question type of the second natural query statement and the target query statement that are determined by the determining unit, to obtain the second result.

14. The question answering apparatus according to any one of claims 8 to 13, wherein
the determining unit is further configured to determine a guide statement based on the first query entity, the first entity characteristic information, the missing part in the second natural query statement, the second natural query statement, and a preset guide policy, wherein the guide statement is used to guide a next operation of a user; and
the output unit is further configured to output the guide statement determined by the determining unit.

15. A question answering apparatus based on a knowledge graph, comprising a memory and one or more processors, wherein the memory is coupled to the processor; and
the memory is configured to store computer program code, wherein the computer program code comprises computer instructions, and when the computer instructions are executed by the question answering apparatus, the question answering apparatus is enabled to perform the question answering method according to any one of claims 1 to 7.

16. A chip system, wherein the chip system is applied to a question answering apparatus based on a knowledge graph, and the chip system comprises one or more interface circuits and one or more processors, wherein
the interface circuit and the processor are interconnected through a line; the interface circuit is configured to: receive a signal from a memory of the question answering apparatus, and send the signal to the processor, wherein the signal comprises computer instructions stored in the memory; and when the processor executes the computer instructions, the question answering apparatus performs the question answering method according to any one of claims 1 to 7.

17. A non-volatile storage medium, comprising computer instructions, wherein when the computer instructions are run on a question answering apparatus based on a knowledge graph, the question answering apparatus is enabled to implement the question answering method according to any one of claims 1 to 7.

18. A computer program product, wherein when the computer program product runs on a computer, the computer is enabled to perform the question answering method according to any one of claims 1 to 7.
